# EUROPEAN PATENT SPECIFICATION

(11) **EP 4 616 607 B1**
(45) Date of publication and mention of the grant of the patent: **30.09.2026**
(21) Application number: 23731792.0
(22) Date of filing: 15.05.2023
(51) Int. Cl.: H04N 21/262, H04N 21/236, H04N 21/24, H04N 21/25, H04N 21/258, H04N 21/442, H04N 21/45, H04N 21/454, H04N 21/466, H04N 21/845

(54) **MEDIA OBJECT DELIVERY OVER A SHARED COMMUNICATIONS CHANNEL WITH MANIFEST TRIMMING**
LIEFERUNG VON MEDIENOBJEKTEN ÜBER EINEN GEMEINSAMEN KOMMUNIKATIONSKANAL MIT TRIMMUNG DES MANIFESTES
LIVRAISON D'OBJETS MULTIMÉDIAS SUR UN CANAL DE COMMUNICATION PARTAGÉ AVEC DÉCOUPAGE DES MANIFESTES

(30) Priority: 21.12.2022 US 202263476619 P
(43) Date of publication of application: 17.09.2025
(73) Proprietor: ViaSat, Inc., Carlsbad, California 92009 (US)
(72) Inventor: NEWMAN, Daniel M., Carlsbad, California 92009 (US); TOTH, Devin R., Carlsbad, California 92009 (US); STOCK, Matthew D., Carlsbad, California 92009 (US)
(74) Representative: Swindell & Pearson Limited
(86) International application number: PCT/US2023/022280
(87) International publication number: WO 2024/136917

(56) References cited:
- US-A1- 2012 047 542
- US-A1- 2013 111 520
- US-A1- 2019 069 039
- US-A1- 2020 045 351

## Description

### Background

Digital media objects may be delivered over a network for rendering a media object at a user device. The media object may comprise one or more media elements. A manifest may be used to orchestrate the delivery of data for the media elements of the media object. The manifest may identify a plurality of renditions of the media elements. A user device may request renditions from the manifest for the one or more media elements. In response to the request for a rendition, the requested rendition may be delivered to the user device for use in rendering the media object at the user device.

US 2020/0045351 A1 discloses systems and methods for controlling network bandwidth utilization by media streaming services.

### Summary

The invention is defined in the appended claims. In some aspects, the techniques described herein relate to a method of operating a media delivery system including a shared communications channel between a service provider and a plurality of user systems, the method including: obtaining, by a provider-media module of the service provider, a manifest of a media object including a plurality of concurrent media elements, the manifest identifying a plurality of renditions of at least one media element of the plurality of concurrent media elements, the plurality of renditions each having one or more attributes defined in the manifest; identifying, by the provider-media module, at least one rendition of the plurality of renditions for deletion from the manifest by applying a trimming rule to the manifest; deleting, by the provider-media module, the at least one rendition to produce a trimmed manifest; and delivering, by the provider-media module, the trimmed manifest to at least a first user system of the plurality of user systems over the shared communications channel of the media delivery system.

In some aspects, the techniques described herein relate to a media delivery system, including: a shared communications channel between a service provider and a plurality of user systems; and a provider-media module, operative to: obtain a manifest of a media object including a plurality of concurrent media elements, the manifest identifying a plurality of renditions of at least one media element of the plurality of concurrent media elements, the plurality of renditions each having one or more attributes defined in the manifest, identify at least one rendition of the plurality of renditions for deletion from the manifest by applying a trimming rule to the manifest, and deleting, by the provider-media module, the at least one rendition to produce a trimmed manifest; wherein the trimmed manifest is delivered via the shared communications channel to at least a first user system of the plurality of user systems.

This Summary is provided to introduce a selection of concepts in a simplified form that are further described below in the Detailed Description. This Summary is not intended to identify key features or essential features of the claimed subject matter, nor is it intended to limit the scope of the claimed subject matter.

Other implementations are also described and recited herein.

### Brief Description of the Drawings

FIG. 1 illustrates a schematic example of a media object.
FIG. 2 illustrates an example of a media delivery system.
FIG. 3 illustrates an example of a media delivery system in which a shared communications channel comprises a satellite in communication with groups of user systems via spot beams.
FIG. 4 illustrates an example of a manifest for a video media object.
FIG. 5 illustrates an example method for processing a manifest to produce a trimmed manifest for delivery of a media object using a shared communications channel.
FIG. 6 illustrates an example method of a user system in response to receiving a trimmed manifest.
FIG. 7 illustrates an example method for a trimming operation in which a predetermined trimming rule is applied to identify and remove at least one rendition from a manifest.
FIG. 8 illustrates an example method for a trimming operation in which a predetermined trimming rule is applied to a model of a manifest.
FIG. 9 illustrates an example method for a trimming operation in which a parametric trimming rule is applied to identify and remove at least one rendition from a manifest based on an external parameter.
FIG. 10 illustrates an example method for a trimming operation in which a parametric trimming rule is applied to a model of a manifest.
FIG. 11 illustrates an example schematic of computing devices suitable for implementing aspects of the disclosed technology.

### Detailed Description

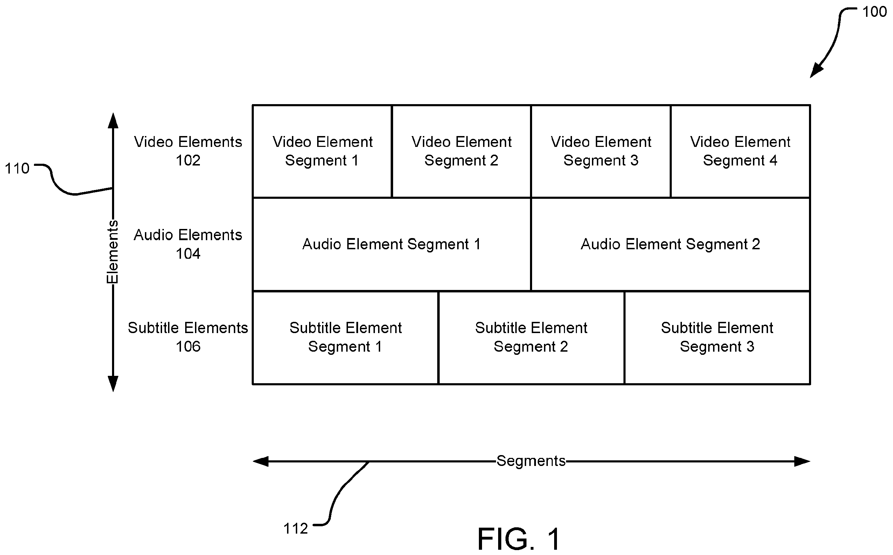

A digital media object may be delivered to a user system for rendering the media object at the user system. FIG. 1 illustrates a schematically represented example of a media object 100. The media object may be selected from a media catalogue that comprises a collection of media objects that a user system may select. A media object may correspond to an entirety of a single selection of the media catalogue such as a movie, an episode of a television series, a song, or a podcast.

The media object 100 may comprise a plurality of concurrent media elements 110 that may collectively define the media object 100 to be rendered at the user system. While a media object 100 is referenced herein that denotes a plurality of media elements 110 that are concurrently rendered to provide the media content, the present disclosure is equally applicable to any media object, including those having a single media element.

In an example, the media object 100 may include media elements 110 comprising a video element 102, an audio element 104, and a subtitle element 106. Additional or fewer media elements may be provided for various media objects. As noted above, in some examples, a media object may comprise a single media element (e.g., an audio element for an audio media object). The media elements 110 may comprise components or layers of the media object 100 that may be concurrently rendered to provide the media object 100 to a user for consumption. For example, the media object 100 may include a video element 102, which is accompanied by an audio element 104 comprising an audio track concurrent to the video element 102. While specific examples are described herein for illustration, media elements 110 of a media object 100 may include any appropriate media elements such as video elements, audio elements, subtitle elements, metadata elements, or other media elements. media object
In addition to the media elements 110, additional data comprising an extra may be provided in connection with the media object 100. Such extras may include metadata or other information presented with the media object 100. In an example, an extra may be an advertisement or the like. In this regard, the extra comprising an advertisement may correspond in some way to the media object 100 or may correspond to the user system requesting the media object 100. For instance, the extra may comprise a targeted advertisement based on the media object 100 or the user system requesting the media object 100.

The media object 100 may be divided into segments 112, with a segment corresponding to a defined portion (e.g., a partial duration) of the media object 100. As shown in FIG. 1, each of the video element 102, the audio element 104, and the subtitle element 106 may comprise a plurality of segments 112 of a given duration of the media object 100. In this regard, the horizontal axis of FIG. 1 may be representative of time. A given duration (e.g., 60 seconds) of a media object 100 may be divided (or the media elements 110 comprising the media object 100 may be divided) into segments 112 (e.g., 1-second segments, 3-second segments, 5-second segments, etc.).

The segment lengths of each media element may be unique for at least some of the media elements 110. For example, in FIG. 1, the video element segments may be of a different duration than the audio element segments and may be of a different duration than the subtitle element segments. That is, segment durations need not be the same for each of the media elements 110 comprising a media object 100 such that, for example, a video element 102 may comprise a first segment duration (e.g., 1 second) whereas an audio element 104 may comprise a second segment duration (e.g., 3 seconds) that is different than the first segment duration. In other examples, the media element segments for different media elements 110 may be of the same duration (e.g., a video element segment and an audio element segment may be of the same duration). In any regard, media elements 110 of the media object 100 may be rendered together to present the media object. In addition, data for media element segments may be sequentially requested from a manifest for each of the media elements comprising the media object 100 to render the media object 100 at a user system (e.g., through HTTP messages or other TCP/IP protocols).

The delivery of the media elements 110 of a media object 100 may be coordinated using a manifest. A manifest may identify resources for use at a user system such that the user system may request and receive data for the media elements 110 to render the media object 100. In an example, a media player executed by hardware and/or software of the user system may be operative to read the manifest to request data identified in the manifest for rendering by the media player at the user system.

A manifest may identify a plurality of different renditions of each of the media elements that are available to be requested by a user system. For example, in the context of a video media object, the manifest may identify a set of video element renditions, a set of audio element renditions, a set of subtitle element renditions, and/or a set of other metadata element renditions. A user system (e.g., a media player executing at the user system) may render a variant of the media object by requesting, receiving, and rendering one of the video element renditions from the manifest, one of the audio element renditions from the manifest, one of the subtitle element renditions from the manifest, and one of the metadata element renditions from the manifest. Thus, different variants of the media object could be rendered by requesting and rendering different combinations of a video element rendition, an audio element rendition, and a subtitle element rendition from the manifest.

A manifest may include a plurality of media element segments, or a new manifest may be provided for each segment of the media object 100. In either regard, a user system may change the rendition of a media element that is requested from the manifest while rendering the media object. For example, the user system may request a different rendition for a media element in a second segment of the media element than was requested for a first segment. In this regard, the media player can render one or more video element segments using a rendition having a first attribute set and another video element segment using a rendition having a second attribute set that is different than the first attribute set. Common examples of such media delivery may be provided by MPEG-DASH or HLS protocols. Such approaches are often referred to as adaptive bit rate approaches, as the rendition selected by a client device may adapt to available network resources.

However, renditions requested from a manifest have generally been requested with consideration only to the user device requesting the media content (e.g., with consideration only to the capabilities of the user device requesting the media data). That is, a manifest may identify an array of available renditions for each media element that are suitable for a wide variety of user device capabilities and experienced conditions at the user device. In turn, the user device may determine which of the renditions to request for playback at the user device based on, for example, device capabilities of the user device that is requesting the renditions. Thus, traditionally the array of available renditions in a manifest has included many different renditions of varying characteristics to support media object delivery that may be optimized for different user devices requesting the renditions.

It is presently recognized that the use of a trimmed manifest from which renditions are selectively removed may facilitate advantages when providing media objects over a network. As will be illustrated in greater detail below, the advantages of use of a trimmed manifest may be realized in communication of a media object to a single user system in a unicast communication as well as in communication of a media object to a plurality of user systems over a shared communication channel in a multicast communication.

Use of a trimmed manifest may be used to control network utilization such that renditions of media elements that require significant network resources (e.g., above a certain threshold) may be removed in a trimmed manifest. This advantage may be realized in unicast communications or multicast communications. The trimmed manifest may facilitate efficient delivery of a media object in response to a user system selecting renditions from the trimmed manifest. As a manifest for a media object may initially include renditions that require significant network resources to deliver, removing these renditions to provide a trimmed manifest may provide for efficient network utilization because a user system may only request those renditions identified in the trimmed manifest from which network resource intensive renditions have been removed. Thus, in one example, trimming a manifest of a media object may remove renditions that require high network usage, such as high-resolution video element renditions, high audio channel count audio element renditions, or the like. In turn, only renditions that utilize more limited network resources may be available for selection from the trimmed manifest by a user system, thus otherwise freeing network resources that would be occupied by high network usage renditions.

Advantages may also be provided when a media object is communicated via a shared communications channel, whether or not the media object is communicated over the shared communications channel as a unicast communication or a multicast communication. Shared communications channels in which a plurality of user systems may share a forward communication link provide a unique network topology that may allow for efficient communication of data via the shared forward communication link. While efficient utilization of network resources is desired in any communication network, it is especially desirable in a media delivery system with a shared communications channel that delivers data to a plurality of user systems. Trimmed manifests may provide specific benefits that leverage the unique network topology of a shared communications channel. Because the hardware infrastructure of the shared communications channel may have finite bandwidth capacity, the ability to deliver data more efficiently to user systems via the shared communications channel may provide enhanced user experiences and/or allow for additional user systems to be serviced by the shared communications channel.

A media delivery system of the present disclosure may trim a manifest for a media object using trimming rules. The trimmed manifest may be used for delivery of the media object in the media delivery system. Use of a trimmed manifest for delivery of a media object may facilitate advantages by limiting renditions in the manifest to those renditions that fall below some determined network utilization level. In addition, the trimming rules applied to a manifest may result in a trimmed manifest comprising those renditions that are useful, of interest, or otherwise useable by a plurality of user systems of a given multicast domain (e.g., that share the shared communications channel) rather than by delivering renditions specific to each individual user device requesting the media object in the multicast domain.

In addition, in the context of a shared communication channel, use of a trimmed manifest may result in more renditions in the trimmed manifest being relevant to, or useable by, a greater number of user systems in communication with the shared communications channel. For example, some renditions may be associated with user system resources that few, if any, user systems include. In turn, not all user systems of the shared communication channel may be capable of rendering certain renditions in a manifest. A shared communications channel may provide efficient multicasting of data for media objects to a plurality of user systems at the client side (e.g., including a requesting user system and a non-requesting user system). That is, because the shared communications channel may multicast data to a plurality of user systems using few or no additional resources than that required to individually deliver data to a given user system, multicasting of data using the shared communications channel may be relatively inexpensive from a network utilization perspective. Accordingly, trimming a manifest may increase the number of user systems that have an interest in the renditions in the trimmed manifest or to which remaining renditions in a trimmed manifest are applicable. That is, the trimmed manifest may include a reduced number of renditions compared to the initial manifest such that the likelihood of a given rendition being reused at multiple user systems is increased as compared to an approach in which each user system selects renditions from the initial manifest having more renditions. As an example, a manifest for a media object may initially identify renditions that require rare equipment to render (e.g., very high-resolution renditions, advanced audio codecs, etc.). As few (if any) user systems in communication with the shared communications channel may have equipment capable of rendering such renditions, removing these renditions to produce a trimmed manifest may preserve renditions that are useful to more user systems, thus avoiding the need to communicate multiple unique renditions. Thus, with an increase in the applicability of the remaining renditions in the trimmed manifest, the efficiency of the network may be improved by multicasting media elements that are requested from the trimmed manifest and increasing the likelihood that the rendition has already been cached in response to another user system having requested the rendition from the trimmed manifest. In turn, by trimming the manifest, the probability that a remaining rendition in the trimmed manifest is useable by user systems in communication with the shared communication channel may be increased, thus further improving network utilization and efficiency.

Accordingly, trimming a manifest of a media object may optimize the quality of a media playback experience for customers while simultaneously increasing the bandwidth efficiency of the shared communications channel to deliver the experience. Accordingly, the disclosure provided herein may facilitate improved network utilization of a shared communications channel through greater network efficiency. By facilitating more efficient network utilization, the user experience at the user systems may be increased (e.g., higher overall quality of the media content may be delivered to more user systems), and/or additional user systems may be serviced by the given hardware/software infrastructure of the shared communications channel. In this regard, the approaches described herein may improve the performance of the shared communications channel of a media delivery system, thus providing an enhanced communication system.

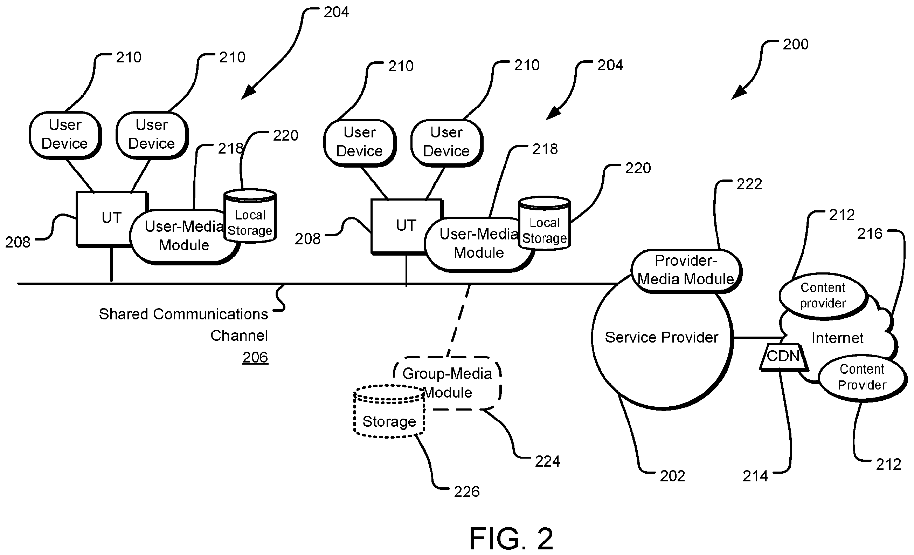

Turning to FIG. 2, an example of a media delivery system 200 is shown in which the approaches described herein may be utilized. A service provider 202 (e.g., an internet service provider) provides connectivity to one or more user systems 204 on a shared communications channel 206. While specific implementations of the shared communications channel 206 are illustrated below, the shared communications channel 206 may include a satellite communication system, a cable television network, a wide area network, or any other appropriate shared communications channel 206. The service provider 202 may be operative to multicast content to the user system 204 using the shared communications channel 206.

Each user system 204 can comprise a user terminal 208 (UT) connected via the shared communications channel 206 to the service provider 202. The user terminal 208, shared communications channel 206, and service provider 202 can connect user devices 210 to media content providers 212, content delivery networks 214, or other sources of media objects via the Internet 216 or another communications network. Examples of user devices 210 include, but are not limited to, a smartphone, a connected television set, a laptop or desktop computer, tablet computers, a set-top box, or any other user premise equipment device capable of rendering media objects. Each user system 204 can include a user-media module 218 and local storage 220 (e.g., comprising a local cache) capable of caching media objects or media elements of a media object. The user-media module 218 may coordinate the request for renditions of media elements of a media object from a manifest. In addition, the user-media module 218 may coordinate the availability of cached media objects from the local storage 220 and/or provide feedback to the service provider 202 regarding media consumption or other parameters regarding the user system 204.

The user-media module 218 may comprise appropriate hardware, software, and/or firmware to execute this functionality. For example, the user-media module 218 may comprise an application-specific integrated circuit (ASIC), a field programmable gate array (FPGA), a hardware processor in operative communication with a memory, or other device. In the case of a processor and memory, the memory may store machine readable instructions that configure the processor to perform the functionality described for the user-media module 218.

In some examples, there may be a group-media module 224 connected to the shared communications channel 206, which may include user-group storage 226 (e.g., comprising a cache) for a group of one or more of the user systems 204 connected to the service provider 202 via the shared communications channel 206. The group-media module 224 may coordinate the request for renditions of media elements of a media object from a manifest for delivery of the renditions of the media elements to a plurality of user systems 204 (e.g., including user systems of a given multicast domain). In addition, the group-media module 224 may provide feedback to the service provider 202 regarding media consumption of user systems 204 connected to the shared communications channel 206 and/or status information regarding the shared communications channel 206.

The group-media module 224 may comprise appropriate hardware, software, and/or firmware to execute this functionality. For example, the group-media module 224 may comprise an application-specific integrated circuit (ASIC), a field programmable gate array (FPGA), a hardware processor in operative communication with a memory, or other device. In the case of a processor and memory, the memory may store machine readable instructions that configure the processor to perform the functionality described for the group-media module 224.

As shown, a provider-media module 222 can be on a provider side of the shared communications channel 206 (e.g., at or near the service provider 202). The provider-media module 222 may be operated by the service provider or by another entity. The provider-media module 222 may be executed at a proxy server operating between the user systems and the service provider equipment. The provider-media module 222 may be operative to apply trimming rules (e.g., predetermined or static trimming rules) to a manifest of a media object. The provider-media module 222 may receive an initial manifest for a media object. The initial manifest may be provided from a source of the media object (e.g., a media content provider 212 or a content delivery network 214). As discussed in greater detail below, the provider-media module 222 may execute to identify and remove one or more renditions therefrom.

The provider-media module 222 may comprise appropriate hardware, software, and/or firmware to execute this functionality. For example, the provider-media module 222 may comprise an application-specific integrated circuit (ASIC), a field programmable gate array (FPGA), a hardware processor in operative communication with a memory, or other device. In the case of a processor and memory, the memory may store machine readable instructions that configure the processor to perform the functionality described for the provider-media module 222.

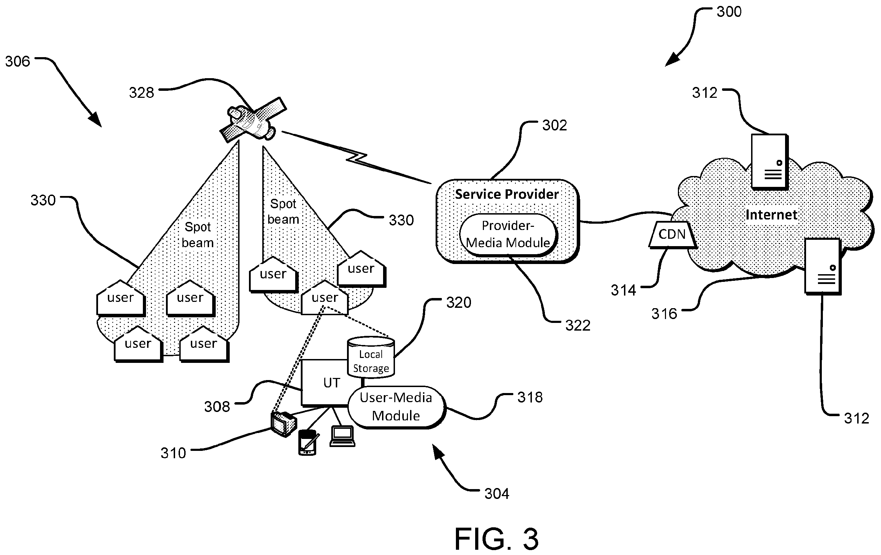

FIG. 3 illustrates a specific example of a media delivery system 300 in which a shared communications channel 306 comprises a satellite 328 in communication with groups of user systems 304 via spot beams 330. In this regard, user systems 304 within a given spot beam 330 may be included in a shared communication channel. Furthermore, in some examples, a spot beam 330 may have multiple carriers. Accordingly, a shared communication channel may comprise a given carrier within a spot beam such that user systems 304 tuned to the given carrier in a spot beam 330 may belong to the shared communication channel. In any regard, FIG. 3 may be a specific implementation of the media delivery system 200 shown in FIG. 2 in which the shared communications channel 206 may include the satellite 328, spot beams 330, and/or carriers to deliver content to the user systems 304. As shown, each user system 304 can include a user terminal 308 comprising a satellite terminal (not shown) and one or more user devices 310, which can be any of the user devices mentioned above. Each user system 304 can also include a user-media module 318 and local storage 320 (e.g., comprising a local cache) capable of caching media objects. The user-media module 318 may also provide similar functionality to the user-media module 218 noted above.

The media delivery system 300 may also include a provider-media module 322 at a service provider 302 that has similar functionality described above. Also, while not shown, a group-media module and/or user-group cache like that discussed above may be provided in connection with one or more of the spot beams 330 to provide similar functionality as that described above for the group-media module 224 and user-group storage 226 relative to the shared communications channel 206.

The media delivery system 300 may also include one or more media content providers 312 and/or content delivery networks 314. The one or more media content providers 312 and/or content delivery networks 314 may provide media objects to the service provider 302 via a wide area network, such as the internet 316, or another type of communications network.

Regardless of whether in the media delivery system 200 or the media delivery system 300, a shared communications channel may be used to deliver data comprising renditions of media elements of a media object to one or more user systems at a client side of a media delivery system. The media elements of a media object may be identified in a manifest that is provided to a user system of the shared communications channel. As described above, the manifest may identify a plurality of renditions of one or more media elements that are available to be requested for the media object. Each rendition identified in the manifest may include one or more attributes that are readable by the client system. In addition, the manifest may include pointer information for each rendition that identifies resources for requesting the rendition of the media element of the media object. Accordingly, the manifest may identify the renditions having different attributes for the media elements that are available for request by a user system to render the media object, along with a pointer that can be used for requesting the rendition. A manifest can identify both media data and metadata. The manifest typically identifies different renditions of each media element that may have unique qualities or characteristics for the media element.

An initial manifest (e.g., received from a media content provider, content delivery network, or another source) may initially identify a large number of renditions. Different renditions of the media elements may comprise different network usage characteristics or other qualities. Alternatively, the different renditions of the media elements may relate to other characteristics such as geolocation (e.g., to provide appropriate audio language renditions and/or subtitle language renditions for a given media object). Further still, the different renditions may relate to different capabilities of the user devices rendering the media object. For instance, renditions may be provided that comprise different codecs used to encode and decode media data of the media element. In this regard, the manifest may provide a user system with a "menu" of available renditions of media elements that may be requested. A user system may select a rendition for each media element of a media object that is requested from the service provider for delivery to the user system to render the media object at the user system. While a large number of renditions may assist in versatility in the rendering of the media object at many different specific qualities (e.g., to tailor the media object to a specific user device or a specific user device capability), providing such a large number of renditions may degrade the efficiency of a shared communication network. For example, because the renditions in an original (e.g., untrimmed) manifest may include high network-utilization renditions, if those renditions are requested by a user system, significant network resources may be required to deliver the rendition. Not only may this degrade network quality for other users but may also impact the Quality of Experience (QoE) of the user system requesting the high network-utilization rendition (e.g., through increased buffer events, increased time-to-start metrics, or the like).

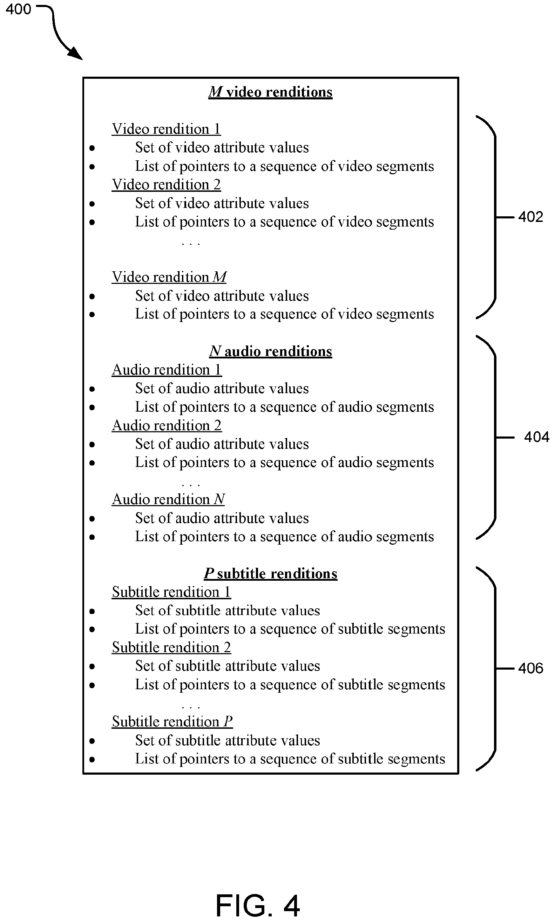

FIG. 4 illustrates an example of a manifest 400 for a video media object comprising three concurrent media elements: a video element 402, an audio element 404, and a subtitle element 406. As shown, the manifest 400 can identify multiple renditions for each media element. Each rendition may correspond to a version of the concurrent media element. As such, each rendition may include a set of one or more attributes that describe the rendition. The one or more attributes may be readable by a provider-media module or a user system. The attributes may define characteristics of the specific rendition of the media element, as will be described in greater detail below. As noted above, each rendition of a media element also includes a list of pointers (e.g., universal resource locators (URLs), universal resource indicators (URIs), or the like) that may be utilized by a user system to request a sequence of segments of the rendition. In still other examples, a manifest may be hierarchical with a top level manifest including a listing of lower level manifests. As an example, a top level manifest may include a video manifest and an audio manifest. Each of the video manifest and the audio manifest may include renditions for video media elements and audio media elements, respectively. In turn, each lower level manifest may include a listing of renditions that each include a list of pointers for use by a user system in requesting a sequence of segments of the renditions.

The manifest 400 may be provided to a user system, and the user system may use the set of attributes to determine which rendition to access or request by use of the list pointers for the selected rendition. For instance, the user system may include logic that is applied to determine which rendition to request from the manifest based on the one or more attributes of the renditions. For example, a user system may request a rendition based on the operating system of the user system and/or measure the available bitrate of the network and select the rendition having the highest bitrate attribute that is within the capability of the network.

In the example illustrated in FIG. 4, the media object comprises M number of renditions of the video element 402, N number of renditions of the audio element 404, and P number of renditions of the subtitle element 406. In this regard, *M, N,* and P may each be independent variables of one or more renditions of each respective media element.

With regard to the video element, each video rendition is defined by a set of video attributes and comprises a list of pointers to sequential video segments that, when played, render that rendition of the video element of the media object. Examples of video attributes that can define a video rendition include an encryption format, a video encoding format (video codec), a quality level (e.g., a color model, a resolution, etc.), a dynamic range, and the like. Other examples of video attributes that define video renditions may include a %-seg value, maximum bit rate, average bit rate, a required bandwidth value (e.g., a network bandwidth measure required to deliver the rendition), a required latency value (e.g., a network latency measure required to deliver the rendition), and supported media player operating system(s). Here a %-seg value can correspond to the frequency at which the rendition has been consumed by a user. In some examples, the %-seg value of each rendition of a concurrent media element in a manifest can correspond to the frequency of user use relative to the other renditions of the concurrent media element. Thus, for example, the %-seg values of each video rendition in a manifest sum to 100%. As may be appreciated, different renditions may have different combinations of attributes, including combinations of any of the foregoing (e.g., a given resolution, encryption, a color model, and an average bit rate).

As also shown, each audio rendition is defined by a set of audio attributes and comprises a list of pointers to sequential audio segments that, when played, render that rendition of the audio element of the media object. Examples of audio attributes that can define an audio rendition include audio encoding format (audio codec), a number of audio channels, audio language, a required bandwidth value, a required latency value, and quality level. Other examples of audio attributes include a %-seg value (as described above), bit rate, and supported media player operating system(s).

Still referring to the example illustrated in FIG. 4, each subtitle rendition is defined by a set of subtitle attributes and comprises a list of pointers to sequential subtitle segments that, when played, render that rendition of the subtitle element of the media object. An example of an attribute that can define a rendition of the subtitle element includes language (e.g., English, Spanish, French, etc.).

As may be appreciated, different renditions may have different combinations of attributes, including combinations of any of the foregoing (e.g., a given resolution, an encryption, a color model, and an average bit rate). Some renditions of a given media element may share at least one attribute. For example, a first rendition and a second rendition may each have a video resolution attribute of 720p. For example, the first rendition may have a high dynamic range and the second rendition may have a standard dynamic range, thus resulting in different variants of the media object when requested. However, maintaining both renditions in the trimmed manifest may not be desirable as the two renditions may provide very little difference in the playback experience. Without performing trimming, different user systems may select each of the renditions from the manifest for transmission over the shared communications channel, resulting in redundant network utilization rather than only providing one of the renditions that may be used by each of the different user systems with a single multicast transmission. This may be the case for each of the video element 402, audio element 404, subtitle element 406, or another media element in the manifest 400. Thus, as noted above, the possible combinations of different attributes may result in a large number of renditions in a manifest that are not efficiently shared by user systems of the shared communications channel. In turn, trimming a manifest 400 to remove one or more renditions for one or more media elements may provide efficiency in network utilization, bandwidth efficiency, and other advantages noted below.

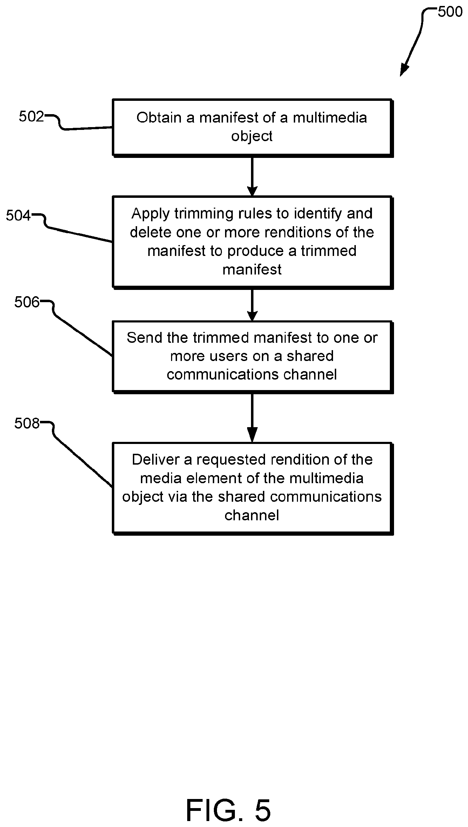

FIG. 5 illustrates example operations of a method 500 of a media delivery system. For example, the method 500 of FIG. 5 can be performed in whole or in part by a service provider (e.g., using a provider-media module such as is shown in FIG. 2 or FIG. 3).

As shown, the method 500 may include an obtaining operation 502, in which a manifest of a media object (e.g., a video media object) is obtained at a provider-media module. The manifest may be received, for example, in response to a request sent by one of the users to a content provider requesting the media object from a media catalogue. In such a scenario, the source of the media object may be the content provider, a content delivery network (CDN), or the like. The media object may be received from any of these sources and may include a manifest identifying available renditions for each media element that is available for the media object. As noted above, the number of renditions for each given media element may be large such that providing a manifest that includes all such renditions to user systems in communication with a shared communications channel may not be efficient. For instance, as noted above, a first video rendition at 720p resolution and high dynamic range may have very little benefit over a second video rendition at 720p resolution and standard dynamic range, yet if both renditions are included in a manifest, different user systems may request each rendition, thus increasing the amount of data needed to be communicated with very little benefit.

In turn, the manifest received in the obtaining operation 502 may be processed in a rule application operation 504. For example, the rule application operation 504 may utilize trimming rules to identify renditions for deletion. The rule application operation 504 may also include deleting identified renditions in the manifest to produce a trimmed manifest.

The trimming rules may comprise one or more predetermined trimming rules to identify renditions to delete to produce the trimmed manifest. The identification of renditions to delete may include applying the predetermined trimming rules that define renditions to delete using the attributes of a rendition defined in the manifest. In this approach, the predetermined trimming rules may only use information contained in the manifest is used to evaluate the rules to determine which renditions to identify for deletion (e.g., without regard to any external information). These predetermined trimming rules may include Boolean operators or other operators that allow for filtering to be applied to the available renditions to provide a reduced number of renditions in the trimmed manifest.

Some predetermined trimming rules may be applicable to all media elements in a manifest. That is, rather than specific predetermined trimming rules that use video rendition attributes or audio rendition attributes, the predetermined trimming rules may identify attributes that are present regardless of the specific type of media element. For example, any rendition of any media element that has a bitrate attribute that exceeds a maximum bitrate value may be identified for deletion from a manifest. Other predetermined trimming rules may be applicable to a given media element such that the predetermined trimming rules specifically relate to video attributes, audio attributes, etc. For example, a predetermined trimming rule may define a maximum video element resolution such that any renditions of a video element that include resolution attributes that exceed the maximum video element resolution are identified for deletion from the manifest. Renditions with a given attribute may all be identified for deletion from the manifest based on the application of a predetermined trimming rule.

In some examples, exceptions to the predetermined trimming rules are provided to avoid deletion of all renditions of a given media element from the trimmed manifest. That is, the rule application operation 504 may include not identifying all renditions for a given media element for deletion. This may help to ensure that each media element in the trimmed manifest includes at least one rendition and that there are no media elements with an empty set of renditions. That is, a default rendition may be preserved for each media element to allow for a user system to request at least one rendition of the media element by selecting the default rendition. The default rendition may be indicated prior to the application of the predetermined trimming rule, or the predetermined trimming rule may comprise logic that identifies a default rendition when applying the rule. As an example, the lowest bitrate rendition for a media element may be identified as the default rendition such that if all renditions for the media element are identified for deletion, the default rendition may nevertheless be preserved in the trimmed manifest. Additionally or alternatively, the predetermined trimming rules may have exceptions that allow for a rendition to be preserved to avoid an empty set, or a check may be performed subsequent to rule application that excepts a rendition from deletion to maintain a rendition for a given media element.

A manifest from which renditions have been deleted based on the predetermined trimming rules may be referred to as a trimmed manifest. The trimmed manifest may be generated by deleting the renditions identified for deletion by the predetermined trimming rules. As such, the rule application operation 504 may include deleting those renditions identified for deletion by the predetermined trimming rules.

A sending operation 506 includes sending the trimmed manifest to one or more user systems. As noted above, the sending operation 506 may include sending the trimmed manifest on a shared communications channel, such as the shared communications channel 206 of FIG. 2 or the shared communications channel 306 of FIG. 3. In this regard, the sending operation 506 may include sending the trimmed manifest to a user system having requested the media object for which the manifest has been trimmed. In turn, the user system may request renditions from the trimmed manifest. In some examples, the trimmed manifest can also be sent to one or more additional user systems for the purpose of allowing any such additional user systems to download and cache the media object or media elements of the media object in accordance with the manifest in anticipation of the non-requesting user systems later requesting the media object. As may be appreciated, the trimmed manifest may include fewer renditions that are more likely to be applicable to a large number of user systems. Further still, a trimmed manifest may occupy less space in memory as it may contain less information than initially provided in the manifest prior to the rule application operation 504.

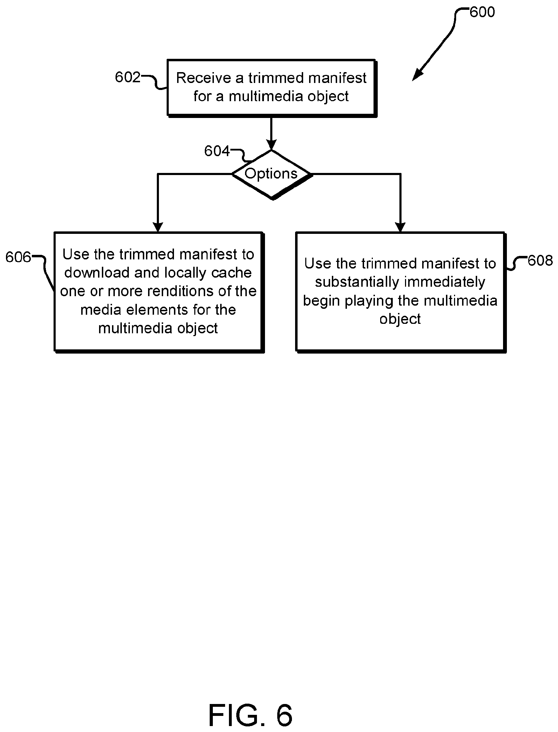

The method 500 may also include a delivering operation 508 in which a rendition for one or more media elements is delivered to one or more user system. The delivering operation 508 may be performed in response to a user system requesting a rendition from the trimmed manifest sent to the user system in the sending operation 506. The request for the rendition may be processed by the service provider 202 or may be communicated to media content providers 212 or content delivery networks 214 for retrieval of the resource associated with the requested rendition. As will be described in FIG. 6 below, when a user system receives the rendition, it may render the rendition for playback or store the rendition in a cache.

The delivering operation 508 may include delivering a requested rendition to a requesting user system. Additionally, the delivering operation 508 may also include delivering the rendition to a non-requesting user system (e.g., via a multicast communication to all users or a subset of users in a multicast domain). The non-requesting user system may be capable of rendering the rendition for playback or caching the rendition. In the example where a requested rendition is delivered to a non-requesting user system, the non-requesting user system may not have received the trimmed manifest. Moreover, upon caching the received rendition at the non-requesting user system, the data comprising the rendition received may be stored in the non-requesting user system cache in a form that may not allow for rendering the data without the non-requesting user system later requesting the media object. Thus, while data may be cached at a non-requesting user system, the non-requesting user system may still be required to be authorized or otherwise receive additional information (e.g., an index) to access the locally cached data prior to rendering the media object.

FIG. 6 illustrates an example method comprising a process 600 of a user system (e.g., a user terminal (UT)) in response to receiving a trimmed manifest (e.g., sent by a provider media module as part of the sending operation 506 of FIG. 5). The process 600 of FIG. 6 can be performed, for example, in whole or in part by a user-media module of a user system such as is shown in FIG. 2 or FIG. 3 above.

A receiving operation 602 of the process 600 may include receiving a trimmed manifest. A determination operation 604 may include determining which subsequent operation are to be performed at the user system. For instance, the determination operation 604 may result in a caching operation 606 for processing the trimmed manifest. In the caching operation 606, the process 600 can use the manifest to download and cache one or more renditions of the media object in a local storage of the user system. For example, the user-media module can download one or more of the renditions of each media element in the trimmed manifest. If the manifest is of a video object, the user-media module can download one or more of each of the video renditions and audio renditions in the trimmed manifest. If the manifest includes renditions of additional media elements (e.g., subtitles), the user-media module can download and cache any such additional media elements.

An advantage of trimming the manifest is that a cached media object may occupy less storage space on the user's local cache when cached from the trimmed manifest. In addition, the trimmed manifest may provide more likely candidate renditions that are relevant to the user system, such as by omitting renditions with certain attributes, such as those with rare codecs or media formats. At the caching operation 606, the process 600 can download and cache no more than the data for renditions identified in the manifest. By trimming a manifest, a media delivery system (e.g., as shown in FIG. 2 or FIG. 3) can cause user systems to cache less than all the renditions that would otherwise be in the initial manifest without trimming of the manifest. That is, without the use of a trimmed manifest, the user system may be allowed to cache additional media elements in its local cache that may be of little or no value to the user system yet may occupy significant space in the user's cache and require additional network usage to deliver. Moreover, by selecting the renditions for media elements of the manifest to delete, the media delivery system can provide the media object with little or no impact on the experience of a user who selects a media object for consumption that is already in a cache (in whole or in part) of the user system.

As noted above, another example of an advantage of trimming the manifest is the efficient use of available bandwidth of a communications channel. For example, entries in the manifest likely to require significant network utilization or resources (e.g., the bandwidth of the shared communications channel) can be deleted, thus freeing network resources that would otherwise be required for renditions with higher network usage. As such, utilizing a trimmed manifest may allow for more efficient operation of the hardware infrastructure of a communication network, thus improving the operation of the communication system. For example, high-quality video renditions (e.g., renditions exceeding predetermined thresholds for bitrate, resolutions, etc.) can be deleted from the manifest so that the user system consumes fewer network resources than would otherwise be used without a trimmed manifest. This may assist in ensuring a user system only utilizes its fair share (or predetermined share based on a user agreement) of the bandwidth currently available on the shared communications channel.

As also shown in FIG. 6, the determination operation 604 of the process 600 may determine to use the manifest to begin to play the media object by rendering the rendition substantially immediately (e.g., in real-time or near real-time) in a playback operation 608. The caching operation 606 and playback operation 608 need not be mutually exclusive. For example, the process 600 can download and cache one or more renditions of the media object in a caching operation 606 and also substantially immediately begin to play the media object as in a playback operation 608. For instance, the first segment of the rendition of the media element may be substantially immediately rendered while subsequent sections are cached for later playback (e.g., at the conclusion of the first segment). Also, in some examples, the process 600 may include only the receiving operation 602 and playback operation 608. That is, the process 600 may omit the determination operation 604 and/or caching operation 606 such that substantially immediate playback of a requested rendition from a trimmed manifest occurs subsequent to the receiving operation 602.

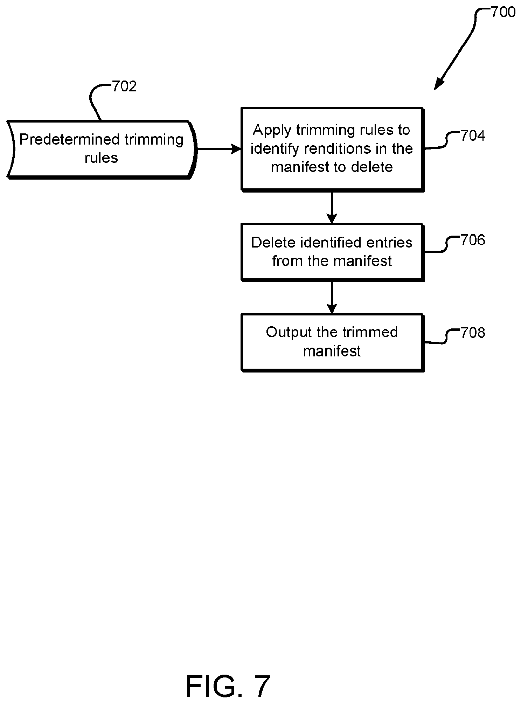

FIG. 7 illustrates an example of a method 700 for performing the rule application operation 504 of FIG. 5 by identifying and deleting renditions of the manifest received in the obtaining operation 502 to produce a trimmed manifest.

A trimming operation 704 of the method 700 identifies renditions in the manifest according to one or more predetermined trimming rules 702. A deleting operation 706 deletes identified renditions from the manifest based on the predetermined trimming rules 702. As noted above, the predetermined trimming rules 702 may be directed to rendition attributes such that the predetermined trimming rules 702 include operators that apply to rendition attributes to identify renditions to remove from the manifest. The trimming operation 704 and deleting operation 706 can be performed for one or more (e.g., all) of a rendition having a given attribute in the manifest. In some examples, the renditions considered for deletion are entire sets of renditions. For example, with reference to FIG. 4, one or more of the video renditions, audio renditions, and or subtitle renditions can be deleted (partially or entirely) from the manifest in accordance with method 700. The foregoing can produce a trimmed manifest that is output in an outputting operation 708.

The predetermined trimming rules 702 may identify renditions having a specified value of an attribute to be deleted from the manifest. That is, the predetermined trimming rules 702 may specify that any rendition having an attribute with a given value that satisfies a predetermined trimming rule 702 is to be identified for deletion. For example, an example predetermined trimming rule 702 may be provided that identifies any rendition having an attribute value for the dynamic range of "high dynamic range (HDR)" to be identified for deletion, such that all renditions with this attribute are identified for deletion regardless of what other attributes are present for the rendition to be deleted.

In some examples, the predetermined trimming rules 702 can function as a filter. For example, the predetermined trimming rules 702 may define a specified attribute of the one or more attributes within a predetermined relationship of a predetermined attribute threshold for the specified attribute. The predetermined relationship may, for example, be defined as the specified attribute being less than, greater than, less than or equal to, greater than or equal to, or equal to the predetermined attribute threshold. As an example, a predetermined trimming rule 702 may have a predetermined attribute threshold for a video resolution of 720p. The predetermined trimming rule 702 may further define that any rendition having a resolution attribute that is greater than 720p may be identified for deletion. Additionally or alternatively, the predetermined trimming rules 702 may identify parameter values or value ranges, labels, identifiers, metadata, and/or combinations of the foregoing as deletion indicators applied to the attributes of the renditions. In this regard, any rendition (e.g., based on the attributes of the rendition) that meets the criteria of the predetermined trimming rules 702 may be identified for deletion in the trimming operation 704 and then removed from the manifest in the deleting operation 706.

The predetermined trimming rules 702 may remove the granularity of available renditions having different attribute combinations. For instance, for a given video resolution, a number of renditions with different bit rates for the given video resolution may be provided. By removing all but one given rendition (e.g., the rendition with the lowest bit rate) of the given video resolution, the number of renditions may be significantly reduced, which may increase the probability that the delivered rendition would have applicability to another user system that has cached the rendition. As may be appreciated, such predetermined trimming rules 702 may reduce the number of renditions delivered to user systems such that the reuse of the provided renditions in other user systems is increased, thus improving the efficiency of the shared communications channel.

Further examples of the predetermined trimming rules 702 may include, where X and Y represent specified attributes, attribute ranges, or other attribute-related variable that may be defined in the predetermined trimming rules 702:
- Delete audio renditions comprising an attribute of audio codec X.
- Delete video renditions comprising an attribute of a resolution of 720p or greater.
- Delete video renditions comprising an attribute of a combination of a color-model X and an encryption attribute Y.
- Delete video renditions comprising an attribute of a combination of a color-model X or an encryption attribute Y.
- Delete video renditions comprising an attribute of video resolution X except for the rendition in the manifest with the lowest bit rate.

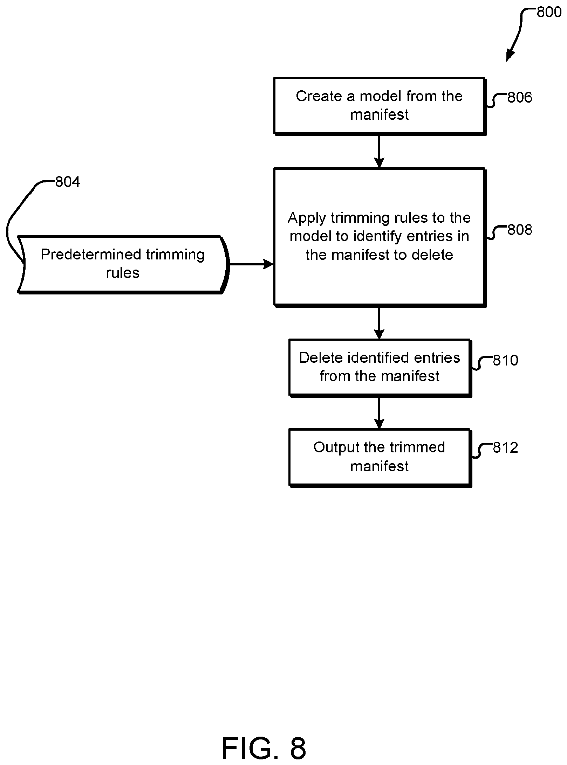

FIG. 8 illustrates yet another example of a method comprising a method 800 for performing the rule application operation 504 of FIG. 5. The method 800 may utilize a model created from a manifest. In one example, use of such a model may facilitate removal of renditions relative to other renditions. Additionally or alternatively, the use of a model from the manifest may allow for trimming of a manifest based on resulting attributes of a rendition that may not be included in the attributes provided from a source of the media object.

To illustrate, examples in which trimming rules are applied to a manifest directly (e.g., rather than to a model of a manifest) may be in a filtering context in which the manifest is not stored in persistent memory at the service provider. Rather, the manifest may be processed only in volatile memory. In this regard, renditions may simply be removed from the manifest in volatile memory in-line with the processing of the manifest. That is, rather than establishing an entire manifest and then removing renditions, the renditions may be removed by simply dropping them from the processing as they are encountered by a processor.

As such, a modeling operation 806 of the method 800 may create a model of the manifest. The model of the manifest may be stored in memory in its entirety to allow for a comprehensive view of the entirety of the manifest rather than being processed in-line. As noted above, this may include determining attributes of renditions relative to other renditions and/or producing determined attributes not expressly provided in the manifest. As regards the former, one example may be ordering renditions according to some attribute or determined attribute in a data structure represented in a data file. As an example, video renditions may be ordered from highest resolution to lowest resolution. In this regard, relative measures of the renditions may be used to identify one or more renditions to delete. For instance, the top 30% of renditions ordered by resolution may be removed from the trimmed manifest. In another example, any rendition having a bit rate higher than the lowest bit rate attribute of all renditions may be removed. That is, a relative measure relative to all available renditions may be provided such that a model may be created to allow for the determination of the relative measures.

Additionally, the model may provide determined attributes, which may not be provided in the attributes from the source of the media object but which may be determined using the attributes originally provided. In this regard, the determined attributes may still be used by the predetermined trimming rules 804 to identify renditions for deletion based on information defined in the manifest because the determined attributes are determined based on information intrinsic to the manifest. For instance, the determined attributes may be calculated values, such as calculated values regarding required bandwidth values of a network to deliver a rendition. As an example, the provided attributes may be used to calculate a determined attribute such as actual bit rate usage (assuming actual bit rate usage is not provided by the source). This may include a calculation based on the provided attributes (e.g., according to a resolution of X, a codec of Y, and an encryption of Z, where X, Y, and Z are attribute variables). In this regard, trimming of the renditions may be according to the determined attributes provided as a result of the model.

Use of such a method 800 may be performed in conjunction with predetermined trimming rules 804 including any of the foregoing examples described in relation to the predetermined trimming rules 702. That is, predetermined trimming rules 804 may be applied to remove renditions as read in-line in the process of compiling the model. In turn, remaining renditions after the application of the filtering rules may comprise the initial model of the manifest to which relative measures and/or determined attributes are used to further remove renditions from the model.

In turn, a trimming operation 808 of the method 800 may apply predetermined trimming rules 804 to the model to identify entries in the manifest to delete. As may be appreciated, the predetermined trimming rules 804 may include definitions of renditions to delete that relate to the model of the manifest, including the use of relative definitions of the renditions and/or rules based on determined attributes. A deleting operation 810 of the method 800 may delete the identified entries (in whole or in part) from the manifest as determined in the trimming operation 808. The trimming operation 808 and deleting operation 810 can be performed with respect to part or all of the model of the manifest. In some examples, entries deleted in the manifest are renditions (e.g., entire renditions). For example, with reference to FIG. 4, one or more of the video renditions, audio renditions, and/or subtitle renditions can be deleted (in whole or in part) from the manifest in accordance with the method 800. The foregoing can produce a trimmed manifest in an outputting operation 812. Any of the predetermined trimming rules 702 described above may be used in the method 800 for predetermined trimming rules 804 to be applied in the trimming operation 808.

In another approach to identifying renditions for deletion to produce a trimmed manifest, it may be desirable to reference information external to the manifest. In turn, in some examples, trimming rules applied to a manifest to produce a trimmed manifest may also include parametric trimming rules. Parametric trimming rules may identify renditions for deletion from a manifest based on, or in reference to, an external parameter not defined in the manifest. The external parameter that is not included in the manifest may allow for the trimming of renditions based on the state of a component, condition, or other variable external to the manifest. The external parameter may relate to any one or more sources external to the manifest. Examples of sources of the external parameter may include a shared communications channel, one or more user systems, a service provider, a content source, or another external source.

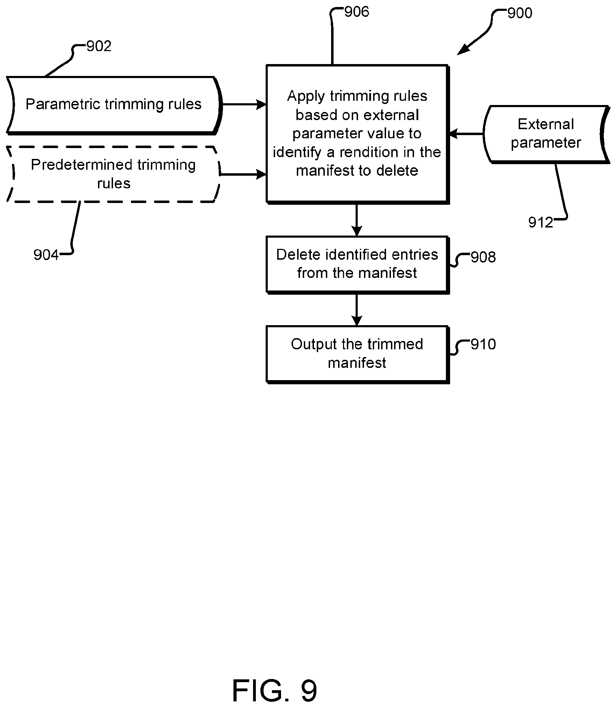

FIG. 9 illustrates an example of a method 900 in which parametric trimming rules 902 may be provided for application to a manifest. A trimming operation 906 may include applying the parametric trimming rules 902 based on an external parameter 912 that is provided for execution of the trimming operation 906. The trimming operation 906 may identify renditions for deletion from a manifest based on the parametric trimming rules 902 in relation to the external parameter 912. Specific examples of parametric trimming rules 902 that use various external parameters 912 are described in greater detail below.

The external parameter 912 may be obtained from any one or more of a number of different sources. In an example, a network performance monitor of the service provider may communicate feedback regarding status of the communication channel maintained by the service provider. This feedback may comprise or be used to determine an external parameter 912. In other examples, the external parameter 912 may include feedback describing the status of the user system requesting the media object. This may include the content of the user system cache, the user system ordering history, predetermined user system preferences, or the like. This information may be received from the user system or the service provider.

In any regard, the parametric trimming rules 902 and external parameter 912 may allow for parametric trimming rules 902 to identify renditions for deletion based on a condition or characteristic external to the manifest. As noted above, one example of parametric trimming rules 902 may consider information regarding a user systems of a media delivery network, such as a requesting user system. In this regard, the external parameter 912 may describe a quality or characteristic of the user systems such that the parametric trimming rules 902 are applied in relation to the external parameter 912. For instance, the external parameter 912 may include contents of a user cache at a user system. In turn, the parametric trimming rules 902 may include logic that identifies renditions for deletion that are not in the cache of the user system. This may reduce the likelihood of the inclusion of renditions in the trimmed manifest that are not in the user system cache. This may be beneficial because if renditions that are not cached are present in the manifest provided to the user system, the user system may request a new rendition for a media element rather than requesting a rendition that is stored in the user system cache. This would cause redundant data for a media element to be sent via the shared communications channel, thus adding to network usage and reducing efficiency. In addition, renditions may be identified for removal if the rendition is only partially cached at the user system. If the parametric trimming rules 902 determine that there are no existing cached renditions at the user system cache, the parametric trimming rules 902 may include rules that maintain low network utilization renditions in the trimmed manifest, such as renditions that fall below some network usage measure including, for example, a maximum resolution or maximum bitrate. As such, a partially cached rendition may be maintained in the trimmed manifest if it is a low network utilization rendition.

Other information regarding a user system may also be used in parametric trimming rules 902. The external parameter 912 may include capabilities of a user device at a user system. For instance, the playback capability of a media player (e.g., including software capabilities and hardware capabilities) may be provided as the external parameter 912. In turn, the parametric trimming rules 902 may identify for deletion any rendition that is not compatible with the capabilities of the media player provided in the external parameter 912. Specifically, the external parameter 912 may include a size of the viewing screen at the user system, a data processing capacity (e.g., available codecs, resolutions, dynamic ranges, etc.), a device type, a device operating system, or other quality or characteristic of the user devices at the user system. In turn, renditions may be deleted, for example, that are not capable of being rendered at the full resolution or bitrate of the rendition, that are not compatible with the user device at the user system, are not compatible with a size of the viewing screen, or other consideration based on the external parameter 912 regarding the user device at the user system.

Still further, information regarding a user system provided as the external parameter 912 may include a location or venue of the user system. For example, the external parameter 912 may identify whether the user system is at a home location, connected to a community network (e.g., a shared network hot spot), connected to a different shared network, connected to an access point in a mobile vehicle (e.g., an airliner, train, boat, bus, etc.), or some other location. In turn, the parametric trimming rules 902 may include determinations on which renditions to identify for deletion based on the external parameter 912 that comprises the location information for the user system. As an example, if the user system is determined to be connected to an access point in a mobile vehicle or in a shared network (e.g., a community hotspot or the like), renditions exceeding some resolution value (e.g., 360p, 420p, 720p, etc.) may be removed. Continuing the example, if the external parameter 912 indicates that the user system is in a home location, renditions having resolutions as high as 1080p may be included in the trimmed manifest.

In another example, the parametric trimming rules 902 may identify renditions for deletion based on operating parameters of the media delivery system. For example, the external parameter 912 may include an operating parameter of the media delivery system that is indicative of a network status of a shared communications channel, such as the available bandwidth of the shared communications channel, a congestion level of the shared communications channel, an expected available bandwidth estimate (e.g., over the anticipated duration of the media object playback), a latency of the shared communications channel, or other operating parameter regarding the media delivery system and/or the shared communications channel thereof. In turn, the parametric trimming rules 902 may execute based on the external parameter 912 including the operating parameter of the media delivery system to identify renditions for deletion based on the operating parameter provided as the external parameter 912.

Examples of this approach may include removing renditions that may exceed available network capacity at the time the trimmed manifest is produced. For example, the external parameter 912 may include an indication of an available bandwidth measure of the shared communications channel. Moreover, an attribute provided in the manifest for a rendition may include a required network capacity value regarding a capacity of the shared communications channel required to communicate the rendition over the shared communications channel (e.g., a required bandwidth value as described above). The parametric trimming rules 902 may identify for deletion any rendition having an attribute of a required bandwidth value in excess of the available bandwidth measure provided as the external parameter 912. In this regard, a rendition may include as an attribute the required bandwidth value to deliver the rendition, or the required bandwidth value may be a determined attribute as described above such that the required bandwidth value may be calculated from other attributes provided in relation to a rendition (e.g., a bit rate of the rendition or the like). Moreover, the parametric trimming rules 902 may identify a predetermined portion of the currently available bitrate such that even if a rendition does not have a required bandwidth value in excess of the available bandwidth measure, the rendition may still be identified for deletion if the required bandwidth value for the rendition exceeds a predetermined portion of the currently available bitrate. For example, any rendition that requires 10% or more of the available bandwidth measure of the shared communications channel may be identified for deletion by the parametric trimming rules 902.

Further still, the external parameter 912 may include an anticipated or predicted bandwidth availability over the course of the expected playback duration of the media object. For instance, if the media object is a 60-minute-long media object, the expected available bandwidth measure of the shared communications channel over a forecast 60-minute period may be determined and provided as the external parameter 912. In the event that a rendition's required bandwidth value would exceed the predicted bandwidth availability or a portion of the predicted bandwidth availability over the course of the expected playback duration, the rendition may be identified by the parametric trimming rules 902 for deletion. Thus, even if a rendition is currently below a bandwidth limit or a bandwidth portion limit, the rendition may still be identified for deletion if it were to be anticipated or predicted to exceed the predicted bandwidth availability or a portion of the predicted bandwidth availability over the course of the expected playback duration.

Another external parameter 912 comprising an operating parameter of the media delivery system may include a network congestion parameter. For instance, parametric trimming rules 902 may identify for deletion a rendition having an attribute indicating the rendition is incompatible with the current congestion level of the shared communications channel indicated by the operating parameter provided as the external parameter 912. Moreover, the parametric trimming rules 902 may include logic that may delete any rendition having a resolution exceeding a first value when the congestion level is low and may delete any rendition having a resolution exceeding a second value when the congestion level is high. The first value of the resolution may be higher than the second value such that renditions with higher resolutions may be maintained in the trimmed manifest when congestion is low, but those renditions may be removed in the event the congestion level is high. In this regard, the parametric trimming rules 902 may become increasingly restrictive in the remaining renditions in the trimmed manifest as the network congestion increases. This may assist in reducing network congestion of the shared communications channel by reducing the variety of renditions available during times of increased network congestion.

In other examples, the external parameter 912 may relate to a service agreement for a user system. For example, the external parameter 912 may include information regarding the service agreement, including any data plan agreement regarding the utilization of the shared communications channel. Such a data plan agreement may define information such as data usage limits, a service-level objective (SLO) of the service agreement, or the like. In turn, the parametric trimming rules 902 may identify for deletion any rendition outside the SLO for a given service agreement. Further still, if the external parameter 912 includes user system data usage, the parametric trimming rules 902 may apply increasing restrictive rules (i.e., with fewer renditions provided in the trimmed manifest or with renditions having lower network utilization) as the user system approaches or exceeds a data limit of the service agreement.

In another example, the external parameter 912 may include content metadata regarding a media object (e.g., metadata that is not provided in the manifest). Examples of such external parameters 912 may include an indication of the type of media object, such as whether the media object is a video, audio content, text, software, HTML content, etc. Further still, other information may be provided, such as, for example, whether a media object corresponds to on-demand media content (e.g., content that is stored for retrieval upon request by a user system) or live media content. For example, the media object may be a video object, and the external parameter 912 for the video object may include content metadata that specifies if the video object is video-on-demand (VOD) media content or live media content. In any of the foregoing examples of external parameter 912 comprising content metadata, the parametric trimming rules 902 may determine renditions for deletion at least in part based on the nature of the content metadata provided as the external parameter 912. For example, different parametric trimming rules 902 may be provided for different trimming treatment of VOD media content versus live media content. Moreover, different parametric trimming rules 902 may be applied to HTML content than what is applied to video content.

In yet another example, the external parameter 912 may include content metadata regarding the media object that provides information as popularity metadata for the media object. The popularity metadata may relate to a predicted popularity, an estimated popularity, or a measured popularity of the media object. For example, the popularity metadata may comprise a calculated popularity score that quantifies the predicted, estimated, or measured popularity of the media object. As one example, a popularity score may relate to the number of user systems in the media delivery system or may be based on other ratings information regarding the media object. Estimated or predicted popularity scores may be generated based on trending information on the popularity of the media object. Still other sources of popularity information may also be included when determining the popularity score such as editorial feedback, critical review information, or the like. In this regard, the parametric trimming rules 902 may determine renditions for deletion at least in part based on the popularity metadata. This may include more extensive or less extensive rule trimming based on the popularity of the media object. For example, a highly popular media object may be provided with relatively more renditions given the high likelihood that many user systems will request the media object. In contrast, a manifest for a highly popular media object may be more extensively trimmed such that rendition reuse among the user systems may be optimized given a potentially large number of user systems requesting the media object.

In any regard, a deletion operation 908 may be performed to delete the renditions identified for deletion in the trimming operation 906. As such, the deletion operation 908 may produce a trimmed manifest upon deletion of the identified renditions. An outputting operation 910 may provide the trimmed manifest to one or more user systems via the shared communication channel.

Also shown in FIG. 9, the parametric trimming rules 902 may optionally be employed in conjunction with one or more predetermined trimming rules 904. The one or more predetermined trimming rules 904 may be provided according to any of the foregoing description regarding predetermined trimming rules in which renditions may be identified for deletion based on attributes or other information defined in the manifest. The parametric trimming rules 902 and one or more predetermined trimming rules 904 may be performed sequentially such that all one or more predetermined trimming rules 904 are initially performed on the manifest and the parametric trimming rules 902 are subsequently performed to further remove renditions. In other examples, individual ones of the parametric trimming rules 902 and one or more predetermined trimming rules 904 may be ordered such that individual ones of the parametric trimming rules 902 and one or more predetermined trimming rules 904 are performed in a specified order to identify renditions for removal from the manifest.

While not expressly discussed in the foregoing examples, it may be appreciated that the parametric trimming rules 902 may include multiple external parameters 912 as inputs such that combinations of any of the foregoing examples may be provided. For example, the external parameter 912 may include multiple parameters that are evaluated collectively in parametric trimming rules 902. Further still, such parametric trimming rules 902 may incorporate one or more predetermined trimming rules 904 for application concurrently in view of the external parameter 912. For example, the parametric trimming rules 902 and one or more predetermined trimming rules 904 may include a rule that combines one or more predetermined trimming rules 904 regarding attributes defined in a manifest in combination with external parameters 912 regarding the contents of a user system cache and operating parameters regarding the media delivery system to identify renditions for deletion based on the attributes, user system cache data, and the network operating parameters collectively.

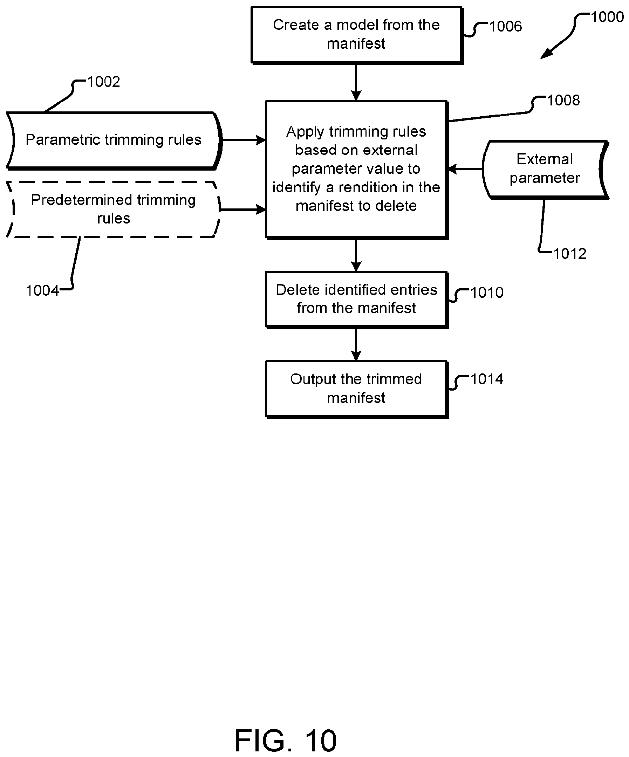

FIG. 10 illustrates an example of a method comprising a method 1000 for performing the rule application operation 504 of FIG. 5. Like the method 800 discussed above in relation to FIG. 8, the method 1000 may utilize a model created from a manifest to provide removal of renditions from a manifest. As noted above, use of a model of the manifest may allow for removal of renditions relative to other renditions and/or the use of a model from the manifest may allow for trimming of a manifest based on resulting attributes of a rendition that may not be included in the attributes provided from a source of the media object. The method 1000 may differ from the method 800 in that the method 1000 may include application of parametric trimming rules 1002 in relation to an external parameter 1012. That is, the parametric trimming rules 1002 and external parameter 1012 may be according to any of the foregoing description but used in relation to a model of the manifest in any manner described above in relation to FIG. 8. Moreover, as shown in FIG. 10, predetermined trimming rules 1004 may also be used in combination with the parametric trimming rules 1002. As such, the method 1000 may include processing a manifest in volatile memory such that the parametric trimming rules 1002 and/or predetermined trimming rules 1004 may apply to the model of the manifest generated in volatile memory to remove renditions in-line with the processing of the manifest. That is, rather than establishing an entire manifest and then removing renditions, the renditions may be removed by simply dropping them from the processing as they are encountered by a processor upon application of the parametric trimming rules 1002 and/or predetermined trimming rules 1004.

As such, a modeling operation 1006 of the method 1000 may create a model of the manifest (e.g., in any manner described above in relation to the modeling operation 806). A rule application operation 1008 of the method 1000 may apply the parametric trimming rules 1002 and/or predetermined trimming rules 1004 to the model to identify entries of renditions in the manifest to delete. A deleting operation 1010 of the method 1000 may delete the identified entries (in whole or in part) from the manifest as determined in the rule application operation 1008. The foregoing can produce a trimmed manifest in an outputting operation 1014.

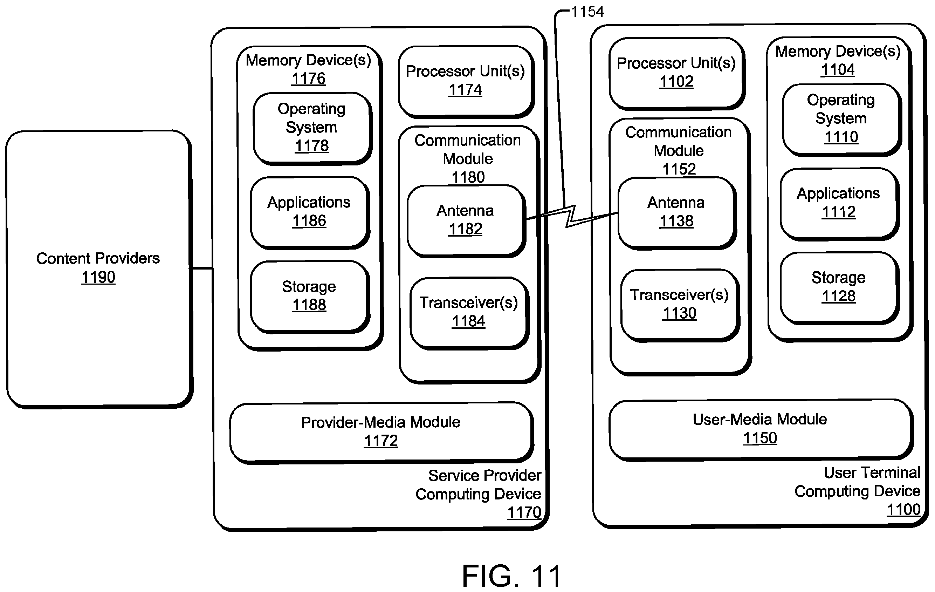

FIG. 11 illustrates an example schematic of a user terminal computing device 1100 suitable for implementing aspects of the disclosed technology. The user terminal computing device 1100 generally executes a user-media module 1150 in connection with the foregoing description. The user terminal computing device 1100 includes one or more processor unit(s) 1102 and memory 1104. The memory 1104 generally includes both volatile memory (e.g., RAM) and non-volatile memory (e.g., flash memory). An operating system 1110, such as the Microsoft Windows^{®} operating system, the Apple macOS operating system, the Linux operating system, or the like resides in the memory 1104 and is executed by the processor unit(s) 1102.

The user terminal computing device 1100 may also include a communication module 1152. The communication module 1152 may include any appropriate hardware, software, and firmware to enable communication via a shared communication channel 1154 with a service provider computing device 1170. For example, the communication module 1152 may include a router (not shown), modem (not shown), transceiver 1130, antenna 1138 or other equipment to facilitate communication by the communication module 1152.

One or more applications 1112 may be loaded in the memory 1104 and executed on the operating system 1110 by the processor unit(s) 1102 to provide functionality of the user-media module 1150 in a manner described above. Applications 1112 may receive input from various input local devices such as a keypad, mouse, stylus, touchpad, joystick, an instrument-mounted input, or the like. The user terminal computing device 1100 may also include various other components, such as a positioning system (e.g., a global positioning satellite transceiver) and storage devices 1128. Other configurations may also be employed.

In an example implementation, the user terminal computing device 1100 comprises hardware and/or software embodied by instructions stored in the memory 1104 and/or the storage devices 1128 and processed by the processor unit(s) 1102. The memory 1104 may be the memory of a host device or of an accessory that couples to the host. Additionally or alternatively, the user terminal computing device 1100 may comprise one or more field programmable gate arrays (FPGAs), application-specific integrated circuits (ASIC), or other hardware/software/firmware capable of providing the functionality described herein.

As noted above, the user terminal computing device 1100 may be in communication with a service provider computing device 1170 via the shared communication channel 1154. The service provider computing device generally executes a provider-media module 1172 in connection with the foregoing description. The service provider computing device 1170 includes one or more processor unit(s) 1174 and memory 1176. The memory 1176 generally includes both volatile memory (e.g., RAM) and non-volatile memory (e.g., flash memory). An operating system 1178, such as the Microsoft Windows^{®} operating system, the Apple macOS operating system, the Linux operating system, or the like resides in the memory 1176 and is executed by the processor unit(s) 1174.

The service provider computing device 1170 may also include a communication module 1180. The communication module 1180 may include any appropriate hardware, software, and firmware to enable communication via the shared communication channel 1154 with the user terminal computing device 1100. For example, the communication module 1152 may include a router (not shown), modem (not shown), transceiver 1184, antenna 1182 or other equipment to facilitate communication by the communication module 1180.

One or more applications 1186 may be loaded in the memory 1176 and executed on the operating system 1178 by the processor unit(s) 1174 to provide functionality of the provider-media module 1172 in a manner described above. Applications 1186 may receive input from various input local devices such as a keypad, mouse, stylus, touchpad, joystick, an instrument-mounted input, or the like. The service provider computing device 1170 may also include various other components, such as a positioning system (e.g., a global positioning satellite transceiver) and storage devices 1188. Other configurations may also be employed.

In an example implementation, the service provider computing device 1170 comprises hardware and/or software embodied by instructions stored in the memory 1176 and/or the storage devices 1188 and processed by the processor unit(s) 1174. The memory 1176 may be the memory of a host device or of an accessory that couples to the host. Additionally or alternatively, the service provider computing device 1170 may comprise one or more field programmable gate arrays (FPGAs), application-specific integrated circuits (ASIC), or other hardware/software/firmware capable of providing the functionality described herein.

The service provider computing device 1170 may be in further communication with one or more content providers 1190. The service provider computing device 1170 may access the one or more content providers 1190 via a network or local connection to access content data and/or receive a manifest according to the foregoing disclosure.

The user terminal computing device 1100 and/or service provider computing device 1170 may include a variety of tangible processor-readable storage media and intangible processor-readable communication signals. Tangible processor-readable storage can be embodied by any available media that can be accessed by the user terminal computing device 1100 and service provider computing device 1170 and includes both volatile and non-volatile storage media, removable and non-removable storage media. Tangible processor-readable storage media excludes intangible communications signals and includes volatile, non-volatile, removable, and non-removable storage media implemented in any method or technology for storage of information such as processor-readable instructions, data structures, program modules, or other data. Tangible processor-readable storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible medium which can be used to store the desired information and which can be accessed by the user terminal computing device 1100. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means an intangible communications signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Some implementations may comprise an article of manufacture. An article of manufacture may comprise a tangible storage medium to store logic. Examples of a storage medium may include one or more types of processor-readable storage media capable of storing electronic data, including volatile memory or non-volatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described implementations. The executable computer program instructions may include any suitable type of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

## Claims

1. A method of operating a media delivery system (200) comprising a shared communications channel (206; 306; 1154) between a service provider (202; 302) and a plurality of user systems (204) in a multicast domain, the method comprising:
obtaining, by a provider-media module (222; 322; 1172) of the service provider, a manifest (400) of a media object (100) comprising a plurality of concurrent media elements (110), the manifest identifying a plurality of renditions of at least one media element of the plurality of concurrent media elements, the plurality of renditions each having one or more attributes defined in the manifest;
identifying, by the provider-media module, at least one rendition of the plurality of renditions for deletion from the manifest by applying a trimming rule (702; 804; 902; 904; 1002; 1004) to the manifest;
deleting, by the provider-media module, the at least one rendition to produce a trimmed manifest for the plurality of user systems in the multicast domain, the plurality of user systems including a requesting user system and a non-requesting user system;
delivering, by the provider-media module, the trimmed manifest to at least the requesting user system and the non-requesting user system of the plurality of user systems in the multicast domain over the shared communications channel of the media delivery system; and
delivering a rendition from the trimmed manifest to the requesting user system and the non-requesting user system.

2. A media delivery system (200), comprising:
a shared communications channel (206; 1154) between a service provider (202; 302) and a plurality of user systems (204) in a multicast domain, the plurality of user systems including a requesting user system and a non-requesting user system; and
a provider-media module (222; 322; 1172), operative to:
obtain a manifest (400) of a media object (100) comprising a plurality of concurrent media elements (110), the manifest identifying a plurality of renditions of at least one media element of the plurality of concurrent media elements, the plurality of renditions each having one or more attributes defined in the manifest,
identify at least one rendition of the plurality of renditions for deletion from the manifest by applying a trimming rule (702; 804; 902; 904; 1002; 1004) to the manifest,
delete, by the provider-media module, the at least one rendition to produce a trimmed manifest for the plurality of user systems in the multicast domain,
deliver the trimmed manifest via the shared communications channel to at least the requesting user system and the non-requesting user system of the plurality of user systems in the multicast domain; and
deliver a rendition from the trimmed manifest to the requesting user system and the non-requesting user system.

3. The method of claim 1 or the media delivery system of claim 2, wherein the plurality of concurrent media elements comprises a video element (102) and an audio element (104).

4. The method of claim 1 or the media delivery system of claim 2, wherein the identifying does not identify all renditions of the plurality of concurrent media elements for deletion such that the trimmed manifest includes a default rendition of each of the plurality of concurrent media elements.

5. The method of claim 1 or the media delivery system of claim 2, wherein the trimming rule comprises a predetermined trimming rule (702; 804) applicable to the one or more attributes of the plurality of renditions defined in the manifest to identify the at least one rendition for deletion.

6. The method or the media delivery system of claim 5, wherein:
the predetermined trimming rule identifies the at least one rendition for deletion only based on the one or more attributes of the at least one rendition defined in the manifest;
the plurality of concurrent media elements comprises a video element (102), and the predetermined trimming rule is applicable to one or more of an encryption format, a video encoding format, a color model, a resolution, a dynamic range, a %-seg value, a maximum bit rate, an average bit rate, or a supported media player operating system;
the plurality of concurrent media elements comprises an audio element (104), and the predetermined trimming rule is applicable to one or more of an audio encoding format, a number of audio channels, an audio language, a %-seg value, a maximum bit rate, an average bit rate, or a supported media player operating system;
the predetermined trimming rule defines a specified value of an attribute of a rendition to be deleted from the manifest; or
the one or more attributes comprise a frequency of user use of a given rendition relative to other renditions of a given concurrent media element, and the predetermined trimming rule identifies the at least one rendition for deletion based on the frequency of user use of the given rendition relative to the other renditions of the given concurrent media element.

7. The method or the media delivery system of claim 5, wherein the predetermined trimming rule defines a specified attribute of the one or more attributes within a predetermined relationship of a predetermined attribute threshold for the specified attribute, and wherein, optionally, the predetermined relationship comprises the specified attribute being less than, greater than, less than or equal to, greater than or equal to, or equal to the predetermined attribute threshold.

8. The method of claim 1 or the media delivery system of claim 2, wherein the trimming rule comprises a parametric trimming rule (902; 1002) that identifies the at least one rendition for deletion at least in part based on an external parameter (912; 1012) not contained in the manifest.

9. The method or the media delivery system of claim 8, wherein:
the trimming rule comprises at least one predetermined trimming rule (702; 804) applicable to the one or more attributes of the plurality of renditions defined in the manifest to identify the at least one rendition for deletion and at least one parametric trimming rule (902; 1002) that identifies another rendition for deletion at least in part based on an external parameter (912; 1012) not contained in the manifest; or
the external parameter comprises a calculated value that is determined based on a function applied to the one or more attributes of the plurality of renditions defined in the manifest.

10. The method or the media delivery system of claim 8, wherein the external parameter comprises information regarding a content of a cache at the requesting user system.

11. The method or the media delivery system of claim 10, wherein the parametric trimming rule identifies the at least one rendition for deletion based on the at least one rendition not being in the cache at the requesting user system, wherein, optionally, the parametric trimming rule does not identify a rendition for deletion if a given attribute of one or more attributes is less than a predetermined attribute threshold.

12. The method or the media delivery system of claim 8, wherein the external parameter comprises an operating parameter of the media delivery system.

13. The method or the media delivery system of claim 12, wherein the operating parameter is a characteristic of the shared communications channel, and
optionally, the operating parameter comprises an available bandwidth measure of the shared communications channel;
optionally, an attribute of the one or more attributes is a required bandwidth value, and the parametric trimming rule identifies the at least one rendition for deletion when the at least one rendition comprises a required bandwidth value that is greater than the available bandwidth measure of the shared communications channel;
optionally, the available bandwidth measure is an expected available bandwidth estimate of the shared communications channel during a duration of playback of the media object.

14. The method or the media delivery system of claim 12, wherein the operating parameter comprises a congestion level of the shared communications channel, wherein, optionally:
an attribute of the one or more attributes is a network capacity of the shared communications channel required to send a rendition to any of the plurality of user systems, and the parametric trimming rule identifies the at least one rendition for deletion based on the at least one rendition having the network capacity exceed available network capacity as indicated by the congestion level of the shared communications channel.

15. The method or the media delivery system of claim 8, wherein the external parameter comprises a playback capability of the requesting user system.

16. The method or the media delivery system of claim 15, wherein an attribute of the one or more attributes corresponds to a quality level of the at least one rendition, and wherein the parametric trimming rule identifies the at least one rendition for deletion based on the quality level of the at least one rendition exceeding the playback capability of the requesting user system, and wherein, optionally, the quality level of the at least one rendition is determined based on the one or more attributes defined in the manifest.

17. The method or the media delivery system of claim 15, wherein the parametric trimming rule identifies the at least one rendition for deletion based on the at least one rendition being incompatible with the playback capability of hardware of the requesting user system.

18. The method or the media delivery system of claim 8, wherein the external parameter comprises information regarding usage of the requesting user system, wherein, optionally:
the external parameter comprises the usage of the requesting user system allowed in a data plan agreement regarding utilization of the shared communications channel; or
the external parameter comprises usage of the shared communications channel by the requesting user system.

19. The method or the media delivery system of claim 8, wherein the external parameter comprises content metadata regarding the media object.

20. The method or the media delivery system of claim 19, wherein:
the content metadata comprises information regarding a type of the media object, wherein optionally the type of the media object comprises one of live media content or on-demand media content;
the content metadata comprises popularity metadata regarding a popularity of the media object; or
the content metadata is received from a source of the media object.

21. The method or the media delivery system of claim 8, wherein the external parameter comprises a location of the requesting user system, wherein, optionally, the location of the requesting user system comprises one of a home location, a community network, or a mobile vehicle.

## Patentansprüche

1. Verfahren zum Betreiben eines Medienbereitstellungssystems (200), umfassend einen geteilten Kommunikationskanal (206; 306; 1154) zwischen einem Dienstanbieter (202; 302) und einer Vielzahl von Nutzersystemen (204) in einer Multicast-Domäne, das Verfahren umfassend:
Erlangen, durch ein Anbieter-Medienmodul (222; 322; 1172) des Dienstanbieters, eines Manifests (400) eines Medienobjekts (100), umfassend eine Vielzahl von gleichzeitigen Medienelementen (110), wobei das Manifest eine Vielzahl von Wiedergaben von mindestens einem Medienelement der Vielzahl von gleichzeitigen Medienelementen identifiziert, die Vielzahl von Wiedergaben jeweils ein oder mehrere Attribute aufweist, die in dem Manifest definiert sind;
Identifizieren, durch das Anbieter-Medienmodul, mindestens einer Wiedergabe der Vielzahl von Wiedergaben zum Löschen aus dem Manifest durch Anwenden einer Trimmregel (702; 804; 902; 904; 1002; 1004) auf das Manifest;
Löschen, durch das Anbieter-Medienmodul, der mindestens einen Wiedergabe, um ein getrimmtes Manifest für die Vielzahl von Nutzersystemen in der Multicast-Domäne zu erzeugen, wobei die Vielzahl von Nutzersystemen ein anforderndes Nutzersystem und ein nicht anforderndes Nutzersystem beinhaltet;
Bereitstellen, durch das Anbieter-Medienmodul, des getrimmten Manifests an mindestens das anfordernde Nutzersystem und das nicht anfordernde Nutzersystem der Vielzahl von Nutzersystemen in der Multicast-Domäne über den geteilten Kommunikationskanal des Medienbereitstellungssystems; und
Bereitstellen einer Wiedergabe aus dem getrimmten Manifest an das anfordernde und das nicht anfordernde Nutzersystem.

2. Medienbereitstellungssystem (200), umfassend:
einen geteilten Kommunikationskanal (206; 1154) zwischen einem Dienstanbieter (202 ; 302) und einer Vielzahl von Nutzersystemen (204) in einer Multicast-Domäne, wobei die Vielzahl von Nutzersystemen ein anforderndes Nutzersystem und ein nicht anforderndes Nutzersystem beinhaltet; und
ein Anbieter-Medienmodul (222; 322; 1172), das zu Folgendem funktionsfähig ist:
Erlangen eines Manifests (400) eines Medienobjekts (100), umfassend eine Vielzahl von gleichzeitigen Medienelementen (110), wobei das Manifest eine Vielzahl von Wiedergaben von mindestens einem Medienelement der Vielzahl von gleichzeitigen Medienelementen identifiziert, die Vielzahl von Wiedergaben jeweils ein oder mehrere Attribute aufweist, die in dem Manifest definiert sind;
Identifizieren mindestens einer Wiedergabe der Vielzahl von Wiedergaben zum Löschen aus dem Manifest durch Anwenden einer Trimmregel (702; 804; 902; 904; 1002; 1004) auf das Manifest; Löschen, durch das Anbieter-Medienmodul, der mindestens einen Wiedergabe, um ein getrimmtes Manifest für die Vielzahl von Nutzersystemen in der Multicast-Domäne zu erzeugen,
Bereitstellen des getrimmten Manifests über den geteilten Kommunikationskanal an mindestens das anfordernde Nutzersystem und das nicht anfordernde Nutzersystem der Vielzahl von Nutzersystemen in der Multicast-Domäne; und
Bereitstellen einer Wiedergabe aus dem getrimmten Manifest an das anfordernde und das nicht anfordernde Nutzersystem.

3. Verfahren nach Anspruch 1 oder Medienbereitstellungssystem nach Anspruch 2, wobei die Vielzahl von gleichzeitigen Medienelementen ein Videoelement (102) und ein Audioelement (104) umfasst.

4. Verfahren nach Anspruch 1 oder Medienbereitstellungssystem nach Anspruch 2, wobei das Identifizieren nicht alle Wiedergaben der Vielzahl von gleichzeitigen Medienelementen zum Löschen identifiziert, sodass das getrimmte Manifest eine standardmäßige Wiedergabe von jedem der Vielzahl von gleichzeitigen Medienelementen beinhaltet.

5. Verfahren nach Anspruch 1 oder Medienbereitstellungssystem nach Anspruch 2, wobei die Trimmregel eine vorbestimmte Trimmregel (702; 804) umfasst, die auf das eine oder die mehreren Attribute der Vielzahl von Wiedergaben anwendbar ist, die in dem Manifest definiert sind, um die mindestens eine Wiedergabe zum Löschen zu identifizieren.

6. Verfahren oder Medienbereitstellungssystem nach Anspruch 5, wobei
die vorbestimmte Trimmregel die mindestens eine Wiedergabe zum Löschen nur basierend auf dem einen oder den mehreren Attributen der mindestens einen Wiedergabe identifiziert, die in dem Manifest definiert sind;
die Vielzahl von gleichzeitigen Medienelementen ein Videoelement (102) umfasst, und die vorbestimmte Trimmregel auf eines oder mehrere von einem Verschlüsselungsformat, einem Videocodierformat, einem Farbmodell, einer Auflösung, einem dynamischen Bereich, einem %-seg-Wert, einer maximalen Bitrate, einer durchschnittlichen Bitrate oder einem unterstützten Mediaplayer-Betriebssystem anwendbar ist;
die Vielzahl von gleichzeitigen Medienelementen ein Audioelement (104) umfasst, und die vorbestimmte Trimmregel auf eines oder mehrere von einem Audiocodierformat, einer Anzahl von Audiokanälen, einer Audiosprache, einem %-seg-Wert, einer maximalen Bitrate, einer durchschnittlichen Bitrate oder einem unterstützten Mediaplayer-Betriebssystem anwendbar ist;
die vorbestimmte Trimmregel einen spezifizierten Wert eines Attributs einer Wiedergabe definiert, die aus dem Manifest gelöscht werden soll; oder
das eine oder die mehreren Attribute eine Häufigkeit einer Nutzerverwendung einer gegebenen Wiedergabe in Bezug auf andere Wiedergaben eines gegebenen gleichzeitigen Medienelements umfassen, und die vorbestimmte Trimmregel die mindestens eine Wiedergabe zum Löschen basierend auf der Häufigkeit der Nutzerverwendung der gegebenen Wiedergabe in Bezug auf die anderen Wiedergaben des gegebenen gleichzeitigen Medienelements identifiziert.

7. Verfahren oder Medienbereitstellungssystem nach Anspruch 5, wobei die vorbestimmte Trimmregel ein spezifiziertes Attribut des einen oder der mehreren Attribute innerhalb einer vorbestimmten Beziehung eines vorbestimmten Attributschwellenwerts für das spezifizierte Attribut definiert, und wobei optional die vorbestimmte Beziehung umfasst, dass das spezifizierte Attribut kleiner als, größer als, kleiner als oder gleich wie, größer als oder gleich wie oder gleich wie der vorbestimmte Attributschwellenwert ist.

8. Verfahren nach Anspruch 1 oder Medienbereitstellungssystem nach Anspruch 2, wobei die Trimmregel eine parametrische Trimmregel (902; 1002) umfasst, die die mindestens eine Wiedergabe zum Löschen zumindest teilweise basierend auf einem externen Parameter (912; 1012) identifiziert, der nicht in dem Manifest enthalten ist.

9. Verfahren oder Medienbereitstellungssystem nach Anspruch 8, wobei
die Trimmregel mindestens eine vorbestimmte Trimmregel (702; 804), die auf das eine oder die mehreren Attribute der Vielzahl von Wiedergaben anwendbar ist, die in dem Manifest definiert sind, um die mindestens eine Wiedergabe zum Löschen zu identifizieren, und mindestens eine parametrische Trimmregel (902; 1002), die eine andere Wiedergabe zum Löschen zumindest teilweise basierend auf einem externen Parameter (912; 1012) identifiziert, der nicht in dem Manifest enthalten ist, umfasst; oder
der externe Parameter einen berechneten Wert umfasst, der basierend auf einer Funktion bestimmt wird, die auf das eine oder die mehreren Attribute der Vielzahl von Wiedergaben angewendet wird, die in dem Manifest definiert sind.

10. Verfahren oder Medienbereitstellungssystem nach Anspruch 8, wobei der externe Parameter Informationen über den Inhalt eines Pufferspeichers auf dem anfragenden Nutzersystem umfasst.

11. Verfahren oder Medienbereitstellungssystem nach Anspruch 10, wobei die parametrische Trimmregel die mindestens eine Wiedergabe zum Löschen basierend auf der mindestens einen Wiedergabe, die nicht in dem Pufferspeicher des anfordernden Nutzersystems ist, identifiziert, wobei optional die parametrische Trimmregel eine Wiedergabe nicht zum Löschen identifiziert, wenn ein gegebenes Attribut eines oder mehrerer Attribute kleiner ist als ein vorbestimmter Attributschwellenwert.

12. Verfahren oder Medienbereitstellungssystem nach Anspruch 8, wobei der externe Parameter einen Betriebsparameter des Medienbereitstellungssystems umfasst.

13. Verfahren oder Medienbereitstellungssystem nach Anspruch 12, wobei der Betriebsparameter eine Eigenschaft des geteilten Kommunikationskanals ist, und
optional der Betriebsparameter ein Maß für verfügbare Bandbreite des geteilten Kommunikationskanals umfasst;
optional ein Attribut des einen oder der mehreren Attribute ein erforderlicher Bandbreitenwert ist, und die parametrische Trimmregel die mindestens eine Wiedergabe zum Löschen identifiziert, wenn die mindestens eine Wiedergabe einen erforderlichen Bandbreitenwert umfasst, der größer ist als das Maß für verfügbare Bandbreite des geteilten Kommunikationskanals;
optional das Maß für verfügbare Bandbreite eine erwartete Schätzung für verfügbare Bandbreite des geteilten Kommunikationskanals während einer Abspieldauer des Medienobjekts ist.

14. Verfahren oder Medienbereitstellungssystem nach Anspruch 12, wobei der Betriebsparameter einen Überlastungsgrad des geteilten Kommunikationskanals umfasst, wobei optional: ein Attribut des einen oder der mehreren Attribute eine Netzkapazität des geteilten Kommunikationskanals ist, die erforderlich ist, um eine Wiedergabe an eines der Vielzahl von Nutzersystemen zu senden, und die parametrische Trimmregel die mindestens eine Wiedergabe zum Löschen basierend auf der mindestens einen Wiedergabe identifiziert, bei der die Netzkapazität die verfügbare Netzkapazität übersteigt, wie es durch den Überlastungsgrad des geteilten Kommunikationskanals angegeben wird.

15. Verfahren oder Medienbereitstellungssystem nach Anspruch 8, wobei der externe Parameter eine Abspielfähigkeit des anfragenden Nutzersystems umfasst.

16. Verfahren oder Medienbereitstellungssystem nach Anspruch 15, wobei ein Attribut des einen oder der mehreren Attribute einem Qualitätsniveau der mindestens einen Wiedergabe entspricht, und wobei die parametrische Trimmregel die mindestens eine Wiedergabe zum Löschen basierend auf dem Qualitätsniveau der mindestens einen Wiedergabe identifiziert, das die Abspielfähigkeit des anfordernden Nutzersystems übersteigt, und wobei optional das Qualitätsniveau der mindestens einen Wiedergabe basierend auf dem einen oder den mehreren Attribute bestimmt wird, die in dem Manifest definiert sind.

17. Verfahren oder Medienbereitstellungssystem nach Anspruch 15, wobei die parametrische Trimmregel die mindestens eine Wiedergabe zum Löschen basierend darauf identifiziert, dass die mindestens eine Wiedergabe mit der Abspielfähigkeit von Hardware des anfordernden Nutzersystems nicht kompatibel ist.

18. Verfahren oder Medienbereitstellungssystem nach Anspruch 8, wobei der externe Parameter Informationen über eine Nutzung des anfordernden Nutzersystems umfasst, wobei optional: der externe Parameter die Nutzung des anfordernden Nutzersystems umfasst, die in einer Datenplanvereinbarung bezüglich einer Nutzung des geteilten Kommunikationskanals erlaubt ist; oder
der externe Parameter eine Nutzung des geteilten Kommunikationskanals durch das anfordernde Nutzersystem umfasst.

19. Verfahren oder Medienbereitstellungssystem nach Anspruch 8, wobei der externe Parameter Inhaltsmetadaten bezüglich des Medienobjekts umfasst.

20. Verfahren oder Medienbereitstellungssystem nach Anspruch 19,
die Inhaltsmetadaten Informationen bezüglich eines Typs des Medienobjekts umfassen, wobei optional der Typ des Medienobjekts eines von Live-Medieninhalten oder On-Demand-Medieninhalten umfasst;
die Inhaltsmetadaten Popularitätsmetadaten bezüglich einer Popularität des Medienobjekts umfassen; oder
die Inhaltsmetadaten von einer Quelle des Medienobjekts empfangen werden.

21. Verfahren oder Medienbereitstellungssystem nach Anspruch 8, wobei der externe Parameter einen Standort des anfordernden Nutzersystems umfasst, wobei optional der Standort des anfordernden Nutzersystems entweder ein Heimatort, ein Gemeinschaftsnetz oder ein mobiles Fahrzeug ist.

## Revendications

1. Procédé de fonctionnement d'un système de distribution de médias (200) comprenant un canal de communication partagé (206 ; 306 ; 1154) entre un fournisseur de services (202 ; 302) et une pluralité de systèmes utilisateurs (204) dans un domaine de multidiffusion, le procédé comprenant :
l'obtention, par un module média de fournisseur (222 ; 322 ; 1172) du fournisseur de services, d'un manifeste (400) d'un objet multimédia (100) comprenant une pluralité d'éléments multimédias simultanés (110), le manifeste identifiant une pluralité de représentations d'au moins un élément multimédia de la pluralité d'éléments multimédias simultanés, la pluralité de représentations ayant chacune un ou plusieurs attributs définis dans le manifeste ;
l'identification, par le module média de fournisseur, d'au moins une représentation de la pluralité de représentations à supprimer du manifeste en appliquant une règle d'élagage (702 ; 804 ; 902 ; 904 ; 1002 ; 1004) au manifeste ;
la suppression, par le module média de fournisseur, de l'au moins une représentation afin de produire un manifeste élagué destiné à la pluralité de systèmes utilisateurs dans le domaine de multidiffusion, la pluralité de systèmes utilisateurs comprenant un système utilisateur demandeur et un système utilisateur non demandeur ;
la distribution, par le module média de fournisseur, du manifeste élagué au moins au système utilisateur demandeur et au système utilisateur non demandeur de la pluralité de systèmes utilisateurs dans le domaine de multidiffusion sur le canal de communication partagé du système de distribution de médias ; et
la distribution d'une représentation issue du manifeste élagué au système utilisateur demandeur et au système utilisateur non demandeur.

2. Système de distribution de médias (200) comprenant :
un canal de communication partagé (206 ; 1154) entre un fournisseur de services (202 ; 302) et une pluralité de systèmes utilisateurs (204) dans un domaine de multidiffusion, la pluralité de systèmes utilisateurs comprenant un système utilisateur demandeur et un système utilisateur non demandeur ; et
un module média de fournisseur (222 ; 322 ; 1172), opérationnel pour :
obtenir un manifeste (400) d'un objet multimédia (100) comprenant une pluralité d'éléments multimédias simultanés (110), le manifeste identifiant une pluralité de représentations d'au moins un élément multimédia de la pluralité d'éléments multimédias simultanés, la pluralité de représentations ayant chacune un ou plusieurs attributs définis dans le manifeste,
identifier au moins une représentation de la pluralité de représentations à supprimer du manifeste en appliquant une règle d'élagage (702 ; 804 ; 902 ; 904 ; 1002 ; 1004) au manifeste,
supprimer, par le module média de fournisseur, l'au moins une représentation afin de produire un manifeste élagué pour la pluralité de systèmes utilisateurs dans le domaine de multidiffusion,
distribuer le manifeste élagué via le canal de communication partagé au moins au système utilisateur demandeur et au système utilisateur non demandeur de la pluralité de systèmes utilisateurs dans le domaine de multidiffusion ; et
distribuer une représentation issue du manifeste élagué au système utilisateur demandeur et au système utilisateur non demandeur.

3. Procédé selon la revendication 1 ou système de distribution de médias selon la revendication 2, dans lequel la pluralité d'éléments multimédias simultanés comprennent un élément vidéo (102) et un élément audio (104).

4. Procédé selon la revendication 1 ou système de distribution de média selon la revendication 2, dans lequel l'identification n'identifie pas toutes les représentations de la pluralité d'éléments multimédias simultanés à supprimer, de sorte que le manifeste élagué comprend une représentation par défaut de chacun de la pluralité d'éléments multimédia simultanés.

5. Procédé selon la revendication 1 ou système de distribution de médias selon la revendication 2, dans lequel la règle d'élagage comprend une règle d'élagage prédéterminée (702 ; 804) applicable à l'un ou plusieurs attributs de la pluralité de représentations définis dans le manifeste pour identifier l'au moins une représentation à supprimer.

6. Procédé ou système de distribution de médias selon la revendication 5, dans lequel :
la règle d'élagage prédéterminée identifie l'au moins une représentation à supprimer uniquement sur la base de l'un ou plusieurs attributs de l'au moins une représentation définie dans le manifeste ;
la pluralité d'éléments multimédias simultanés comprennent un élément vidéo (102), et la règle d'élagage prédéterminée est applicable à un ou plusieurs d'un format de cryptage, d'un format de codage vidéo, d'un modèle de couleur, d'une résolution, d'une plage dynamique, d'une valeur %-seg, d'un débit binaire maximal, d'un débit binaire moyen ou d'un système d'exploitation de lecteur multimédia pris en charge ;
la pluralité d'éléments multimédias simultanés comprennent un élément audio (104), et la règle d'élagage prédéterminée est applicable à un ou plusieurs d'un format de codage audio, d'un certain nombre de canaux audio, d'un langage audio, d'une valeur %-seg, d'un débit binaire maximal, d'un débit binaire moyen ou d'un système d'exploitation de lecteur multimédia pris en charge ;
la règle d'élagage prédéterminée définit une valeur spécifiée d'un attribut d'une représentation à supprimer du manifeste ; ou
l'un ou plusieurs attributs comprennent une fréquence d'utilisation par l'utilisateur d'une représentation donnée par rapport à d'autres représentations d'un élément multimédia simultané donné, et la règle d'élagage prédéterminée identifie l'au moins une représentation à supprimer sur la base de la fréquence d'utilisation par l'utilisateur de la représentation donnée par rapport aux autres représentations de l'élément multimédia simultané donné.

7. Procédé ou système de distribution de médias selon la revendication 5, dans lequel la règle d'élagage prédéterminée définit un attribut spécifié de l'un ou plusieurs attributs dans une relation prédéterminée d'un seuil d'attribut prédéterminé pour l'attribut spécifié, et dans lequel, facultativement, la relation prédéterminée comprend l'attribut spécifié qui est inférieur à, supérieur à, inférieur ou égal à, supérieur ou égal à, ou égal au seuil d'attribut prédéterminé.

8. Procédé selon la revendication 1 ou système de distribution de médias selon la revendication 2, dans lequel la règle d'élagage comprend une règle d'élagage paramétrique (902 ; 1002) qui identifie l'au moins une représentation à supprimer au moins en partie sur la base d'un paramètre externe (912 ; 1012) non contenu dans le manifeste.

9. Procédé ou système de distribution de médias selon la revendication 8, dans lequel :
la règle d'élagage comprend au moins une règle d'élagage prédéterminée (702 ; 804) applicable à l'un ou plusieurs attributs de la pluralité de représentations définis dans le manifeste pour identifier l'au moins une représentation à supprimer et au moins une règle d'élagage paramétrique (902 ; 1002) qui identifie une autre représentation à supprimer au moins en partie sur la base d'un paramètre externe (912 ; 1012) non contenu dans le manifeste ; ou
le paramètre externe comprend une valeur calculée qui est déterminée sur la base d'une fonction appliquée à l'un ou plusieurs attributs de la pluralité de représentations définis dans le manifeste.

10. Procédé ou système de distribution de médias selon la revendication 8, dans lequel le paramètre externe comprend des informations concernant un contenu d'une mémoire cache au niveau du système utilisateur demandeur.

11. Procédé ou système de distribution de médias selon la revendication 10, dans lequel la règle d'élagage paramétrique identifie l'au moins une représentation à supprimer sur la base du fait que l'au moins une représentation ne soit pas dans la mémoire cache au niveau du système utilisateur demandeur, dans lequel, facultativement, la règle d'élagage paramétrique n'identifie pas une représentation à supprimer si un attribut donné d'un ou plusieurs attributs est inférieur à un seuil d'attribut prédéterminé.

12. Procédé ou système de distribution de médias selon la revendication 8, dans lequel le paramètre externe comprend un paramètre de fonctionnement du système de distribution de médias.

13. Procédé ou système de distribution de médias selon la revendication 12, dans lequel le paramètre de fonctionnement est une caractéristique du canal de communications partagé, et
facultativement, le paramètre de fonctionnement comprend une mesure de bande passante disponible du canal de communication partagé ;
facultativement, un attribut de l'un ou plusieurs attributs est une valeur de bande passante requise, et la règle d'élagage paramétrique identifie l'au moins une représentation à supprimer lorsque l'au moins une représentation comprend une valeur de bande passante requise qui est supérieure à la mesure de bande passante disponible du canal de communications partagé ;
facultativement, la mesure de bande passante disponible est une estimation de bande passante disponible attendue du canal de communication partagé pendant une durée de lecture de l'objet multimédia.

14. Procédé ou système de distribution de médias selon la revendication 12, dans lequel le paramètre de fonctionnement comprend un niveau d'encombrement du canal de communications partagé, dans lequel, facultativement :
un attribut de l'un ou plusieurs attributs est une capacité de réseau du canal de communications partagé requis pour envoyer une représentation à l'un quelconque de la pluralité de systèmes utilisateurs, et la règle d'élagage paramétrique identifie l'au moins une représentation à supprimer sur la base du fait que l'au moins une représentation ayant la capacité réseau dépasse la capacité réseau disponible, comme indiqué par le niveau de congestion du canal de communication partagé.

15. Procédé ou système de distribution de médias selon la revendication 8, dans lequel le paramètre externe comprend une capacité de lecture du système utilisateur demandeur.

16. Procédé ou système de distribution de médias selon la revendication 15, dans lequel un attribut de l'un ou plusieurs attributs correspond à un niveau de qualité de l'au moins une représentation, et dans lequel la règle d'élagage paramétrique identifie l'au moins une représentation à supprimer sur la base du fait que le niveau de qualité de l'au moins une représentation dépasse la capacité de lecture du système utilisateur demandeur, et dans lequel, facultativement, le niveau de qualité de l'au moins une représentation est déterminé sur la base de l'un ou plusieurs attributs définis dans le manifeste.

17. Procédé ou système de distribution de médias selon la revendication 15, dans lequel la règle d'élagage paramétrique identifie l'au moins une représentation à supprimer sur la base du fait que l'au moins une représentation soit incompatible avec la capacité de lecture du matériel du système utilisateur demandeur.

18. Procédé ou système de distribution de médias selon la revendication 8, dans lequel le paramètre externe comprend des informations concernant l'utilisation du système utilisateur demandeur, dans lequel, facultativement :
le paramètre externe comprend l'utilisation du système utilisateur demandeur autorisé dans un accord de plan de données concernant l'utilisation du canal de communications partagé ; ou
le paramètre externe comprend l'utilisation du canal de communication partagé par le système utilisateur demandeur.

19. Procédé ou système de distribution de médias selon la revendication 8, dans lequel le paramètre externe comprend des métadonnées de contenu concernant l'objet multimédia.

20. Procédé ou système de distribution de médias selon la revendication 19, dans lequel :
les métadonnées de contenu comprennent des informations concernant un type de l'objet multimédia, dans lequel facultativement le type de l'objet multimédia comprend l'un d'un contenu multimédia en direct ou d'un contenu multimédia à la demande ;
les métadonnées de contenu comprennent des métadonnées de popularité concernant une popularité de l'objet multimédia ; ou
les métadonnées de contenu sont reçues à partir d'une source de l'objet multimédia.

21. Procédé ou système de distribution de médias selon la revendication 8, dans lequel le paramètre externe comprend un emplacement du système utilisateur demandeur, dans lequel, facultativement, l'emplacement du système utilisateur demandeur comprend l'un d'un emplacement domestique, d'un réseau communautaire ou d'un véhicule mobile.
